# EUROPEAN PATENT APPLICATION

(11) **EP 2 690 144 A1**
(43) Date of publication of application: **29.01.2014**
(21) Application number: 12765301.2
(22) Date of filing: 14.03.2012
(51) Int. Cl.: C09D 11/00, B41J 2/01, B41M 5/00

(54) **INK COMPOSITION AND IMAGE FORMING METHOD**

(30) Priority: 25.03.2011 JP 2011068835
(71) Applicant: FUJIFILM Corporation, Tokyo 106-8620 (JP)
(72) Inventor: NAKAMURA, Ippei, Ashigarakami-gun Kanagawa 258-8577 (JP); SHIMOHARA, Norihide, Ashigarakami-gun Kanagawa 258-8577 (JP); HIRONAKA, Koji, Ashigarakami-gun Kanagawa 258-8577 (JP)
(74) Representative: Morpeth, Fraser Forrest
(86) International application number: PCT/JP2012/056593
(87) International publication number: WO 2012/132909

(57) **Abstract**

An ink composition includes (component A) a compound having a group represented by the following Formula (1), (component B1) a monofunctional polymerizable compound, and (component C) a coloring material: 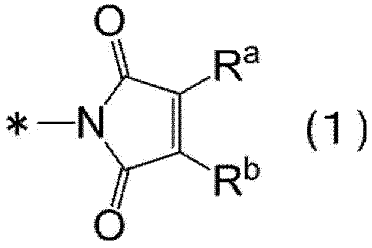 wherein, in Formula (1), R^{a} and R^{b} each independently represent a hydrogen atom or an alkyl group having 1 to 4 carbon atoms; R^{a} and R^{b} may be bonded to each other to form a 4- to 6-membered alicyclic structure; R^{a} and R^{b} do not represent a hydrogen atom at the same time; and * represents a bonding site.

## Description

### Technical Field

The invention relates to an ink composition and an image forming method.

### Background Art

Examples of an image recording method for forming an image on a recording medium such as paper based on image data signals include inkjet systems.

As an ink composition that can be cured by irradiation of active energy rays such as UV rays and used as an ink composition for inkjet recording (i.e., an active energy ray-curable ink composition), an ink composition which is cured at a high sensitivity and can form an image with high quality is demanded.

As for an active energy ray-curable ink composition, an ink composition used in combination with a polymerizable monomer and a photopolymerization initiator is suggested, for example (for example, see, Japanese Patent Application Laid-Open (JP-A) No. 5-214280).

Furthermore, in JP-A No. 2000-211249, an active energy ray-curable inkjet ink-absorbing layer composition including polyfunctional (meth) acrylate and at least two maleimide skeletons in a molecule thereof is disclosed.

### SUMMARY OF INVENTION

### Technical Problem

However, JP-A No. 5-214280 does not disclose improving a phenomenon (i.e., blocking) of ink transfer onto other printed matter superposed when printed recording media are superposed on each other.

Furthermore, JP-A No. 2000-211249 is directed to a technique relating to an ink-absorbing layer, and an jetting property of an ink composition at the time of forming an image by an inkjet method and blocking resistance of an image to be formed is not discussed.

The invention has been made in view of the above problems, and an object of the invention is to achieve the followings.

That is, an object of the invention is to provide an ink composition which is favorable for inkjet recording and which has and excellent jetting property at the time of forming an image and an excellent blocking resistance of an image to be formed, and an image forming method.

### Solution to Problem

Accordingly, the means for solving the above problems are as follows.
<1> An ink composition comprising:
   (component A) a compound having a group represented by the following Formula (1);
   (component B1) a monofunctional polymerizable compound; and
   (component C) a coloring material: 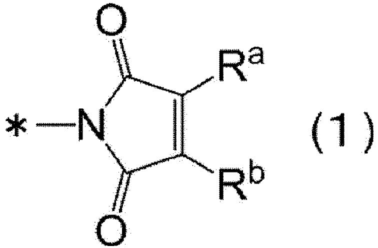 wherein, in Formula (1), R^{a} and R^{b} each independently represent a hydrogen atom or an alkyl group having 1 to 4 carbon atoms; R^{a} and R^{b} may be bonded to each other to form a 4- to 6-membered alicyclic structure; R^{a} and R^{b} do not represent a hydrogen atom at the same time; and * represents a bonding site.
<2> The ink composition according to <1>, further comprising (component B2) a polyfunctional polymerizable compound.
<3> The ink composition according to <2>, wherein a total content of the (component B1) and the (component B2) in the ink composition is from 50% by mass to 90% by mass with respect to the ink composition.
<4> The ink composition according to <2> or <3>, wherein a content of the (component B1) monofunctional polymerizable compound is from 50% by mass to 99.5% by mass with respect to a total content of the (component B1) monofunctional polymerizable compound and the (component B2) polyfunctional polymerizable compound.
<5> The ink composition according to any one of <1> to <4>, wherein a content of the (component A) in the ink composition is from 0.1 % by mass to 20% by mass with respect to the ink composition.
<6> The ink composition according to <5>, wherein a content of the (component A) in the ink composition is from 1% by mass to 15% by mass with respect to the ink composition.
<7> The ink composition according to any one of <1> to <6>, wherein the (component A) is a compound represented by the following Formula (11): 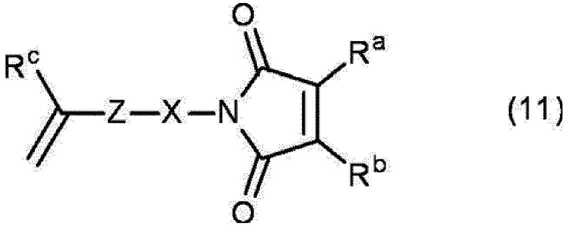 wherein, in Formula (11), R^{a} and R^{b} each independently represent a hydrogen atom or an alkyl group having 1 to 4 carbon atoms; R^{a} and R^{b} may be bonded to each other to form a 4- to 6-membered alicyclic structure; R^{a} and R^{b} do not represent a hydrogen atom at the same time; R^{c} represents a hydrogen atom or a methyl group; Z represents a single bond, -COO-* or -CONR^{d}-*; R^{d} represents a hydrogen atom or an alkyl group having 1 to 4 carbon atoms; * represents a bonding site with X; and X represents a group selected from the group consisting of an alkylene group, an arylene group, an aralkylene group, and an alkenylene group.
<8> The ink composition according to <7>, wherein X in Formula (11) is an alkylene group having 1 to 12 carbon atoms, an arylene group having 6 to 14 carbon atoms, or an aralkylene group having 7 to 20 carbon atoms.
<9> The ink composition according to any one of <1> to <6>, wherein the (component A) is a polymer including a repeating unit represented by the following Formula (1a): 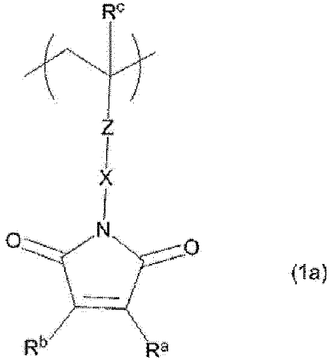 wherein, in Formula (1a), R^{a} and R^{b} each independently represent a hydrogen atom or an alkyl group having 1 to 4 carbon atoms; R^{a} and R^{b} may be bonded to each other to form a 4- to 6-membered alicyclic structure; R^{a} and R^{b} do not represent a hydrogen atom at the same time; R^{c} represents a hydrogen atom or a methyl group; Z represents a single bond, -COO-* or -CONR^{d}-*; R^{d} represents a hydrogen atom or an alkyl group having 1 to 4 carbon atoms; * represents a bonding site with X; and X represents a group selected from the group consisting of an alkylene group, an arylene group, an aralkylene group, and an alkenylene group.
<10> The ink composition according to <9>, wherein X in Formula (1a) is an alkylene group having 1 to 12 carbon atoms, an arylene group having 6 to 14 carbon atoms, or an aralkylene group having 7 to 20 carbon atoms.
<11> The ink composition according to any one of <1> to <10>, comprising an N-vinyl compound as the (component B1) monofunctional polymerizable compound.
<12> The ink composition according to <11>, wherein the N-vinyl compound is represented by the following Formula (V): 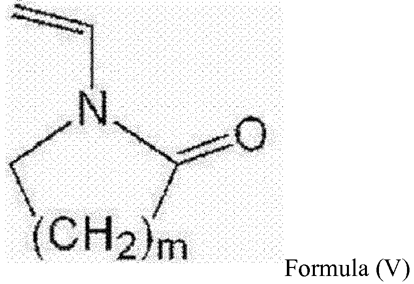 wherein, in Formula (V), m represents an integer of from 1 to 5.
<13> The ink composition according to any one of <1> to <12>, being an ink composition for inkjet recording.
<14> An image forming method comprising:
   an ink application process of applying the ink composition according to any one of <1> to <13> onto a recording medium; and
   an irradiation process of irradiating the applied ink composition with an active energy ray.
<15> The image forming method according to <14>, wherein the process of applying the ink composition is performed according to an inkjet method.

### Advantageous Effect of Invention

According to the invention, an ink composition which is favorable for inkjet recording and which has an excellent jetting property at the time of forming an image and an excellent blocking resistance of an imageto be formed and an image forming method can be provided.

### BEST MODE FOR CARRYING OUT THE INVENTION

### [Ink composition]

The ink composition of the invention includes (component A) a compound having a group represented by the following Formula (1), (component B1) a monofunctional polymerizable compound, and (component C) a coloring material. Hereinbelow, the ink composition of the invention is explained in order. 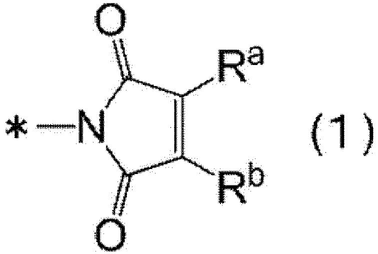 (in Formula (1), R^{a} and R^{b} each independently represent a hydrogen atom or an alkyl group having 1 to 4 carbon atoms, and R^{a} and R^{b} may be bonded to each other to form a 4- to 6-membered alicyclic structure, and R^{a} and R^{b} do not represent a hydrogen atom at the same time. * represents a bonding site).

In the present specification, the numbers before and after "-" or "to" in a range represents using "-" or "to" are included in that range as the minimum and maximum values

Hereinbelow, the ink composition of the invention is explained in greater detail.

[(Component A) compound having a group represented by Formula (1)]

The ink composition of the invention includes a compound having a group represented by the following Formula (1) as an essential component. 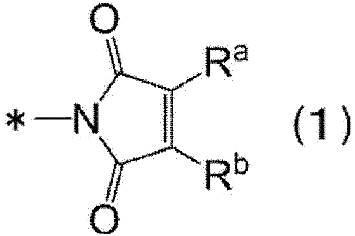 (in Formula (1), R^{a} and R^{b} each independently represent a hydrogen atom or an alkyl group having 1 to 4 carbon atoms, and R^{a} and R^{b} may be bonded to each other to form a 4- to 6-membered alicyclic structure, and R^{a} and R^{b} do not represent a hydrogen atom at the same time. * represents a bonding site).

In Formula (1), R^{a} and R^{b} each independently represent a hydrogen atom or an alkyl group having 1 to 4 carbon atoms, and R^{a} and R^{b} do not represent a hydrogen atom at the same time. R^{a} and R^{b} may be simultaneously an alkyl group, or one of them may be an alkyl group. However, it is preferable that R^{a} and R^{b} are simultaneously an alkyl group.

In Formula (1), when R^{a} and R^{b} are an alkyl group having 1 to 4 carbon atoms, an alkyl group having 1 to 2 carbon atoms (i.e., methyl group and ethyl group) is preferable, and an alkyl group having 1 carbon atom (i.e., methyl group) is particularly preferable. Those groups may have a linear structure or a branched structure. Specific examples thereof include a methyl group, an ethyl group, a propyl group, an isopropyl group, a butyl group, an isobutyl group, a sec-butyl group, and a t-butyl group. R^{a} and R^{b} may be bonded to each other to form a 4- to 6-membered alicyclic structure, and when an alicyclic structure is formed, it is preferable to form a 5- to 6-membered alicyclic structure and it is more preferable to form a 6-membered alicyclic structure.

The (component A) in the invention is preferably water soluble or water dispersible and more preferably water soluble. Specifically, 1 g of the (component A) is preferably dissolved or dispersed in an emulsion state, in 30 ml of water, is more preferably dissolved or dispersed, in an emulsion state in 20 ml of water, and is particularly preferably dissolved or dispersed in an emulsion state, in 10 ml of water.

Specific examples of the group represented by Formula (1) in the (component A) in the invention are described below. However, it is evident that the invention is not limited to these.

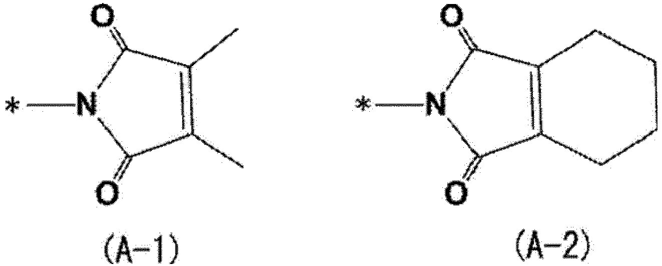

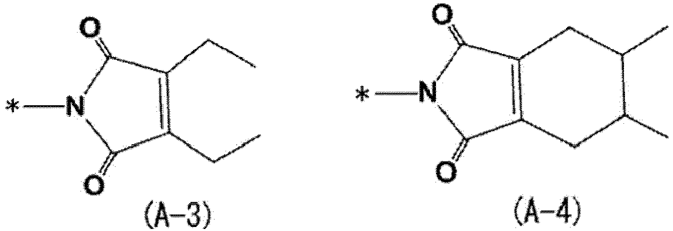

The (component A) may be a low molecular compound having a molecular weight of about 200 to about 2,000 or a polymer compound having a weight average molecular weight of more than 5,000. The (component A) may contain both the low molecular compound and the polymer compound, but the (component A) is preferably a polymer compound having a molecular weight of more than 5,000.

When the (component A) is a low molecular compound having a molecular weight of about 200 to about 2,000 it is preferably a compound represented by the following Formula (11). 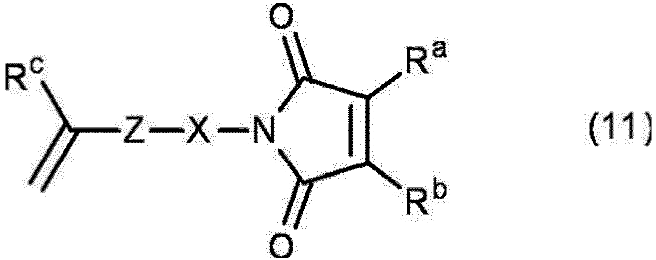 (in Formula (11), R^{a} and R^{b} each independently represent a hydrogen atom or an alkyl group having 1 to 4 carbon atoms, and R^{a} and R^{b} may be bonded to each other to form a 4- to 6-membered alicyclic structure, and R^{a} and R^{b} do not represent a hydrogen atom at the same time. R^{c} represents a hydrogen atom or a methyl group. Z represents a single bond, -COO-* or -CONR^{d}-*, and R^{d} represents a hydrogen atom or an alkyl group having 1 to 4 carbon atoms. * represents a bonding site with X. X represents a group selected from the group consisting of an alkylene group, an arylene group, an aralkylene group, and an alkenylene group).

In Formula (11), when R^{a} and R^{b} are an alkyl group having 1 to 4 carbon atoms, the alkyl group has the same definitions as those exemplified for R^{a} and R^{b} in Formula (1) described above (including the preferred range).

In Formula (11), R^{c} represents a hydrogen atom or a methyl group. R^{c} is preferably a methyl group.

In Formula (11), Z represents a single bond, -COO-* or -CONR^{d}-*, and R^{d} represents a hydrogen atom or an alkyl group having 1 to 4 carbon atoms. * represents a bonding site with X. Z is preferably -COO-*.

Further, R^{d} represents a hydrogen atom or an alkyl group having 1 to 4 carbon atoms. The alkyl group having 1 to 4 carbon atoms may have a linear structure or a branched structure. Specific examples thereof include a methyl group, an ethyl group, a propyl group, an isopropyl group, a butyl group, an isobutyl group, a sec-butyl group, and a t-butyl group. R^{d} is preferably a hydrogen atom or an alkyl group having 1 to 2 carbon atoms, that is, a methyl group or an ethyl group, and particularly preferably a hydrogen atom. R^{d} may have a substituent group or may have no substituent group, but it is preferable that R^{d} does not have a substituent group.

In Formula (11), X represents a group selected from the group consisting of an alkylene group, an arylene group, an aralkylene group, and an alkenylene group. X is preferably a group selected from the group consisting of an alkylene group, an arylene group, and an aralkylene group, more preferably an alkylene group having 1 to 12 carbon atoms, an arylene group having 6 to 14 carbon atoms, and an aralkylene group having 7 to 20 carbon atoms, and particularly preferably an alkylene group having 1 to 12 carbon atoms. Those groups may have a substituent group or may have no substituent group, and may have an ether bond, an ester bond, an amide bond, or a urethane bond.

When the (component A) includes the compound represented by Formula (11), preferred examples of the (component A) include the following compounds (11-1) to (11-17), but the invention is not limited to these.

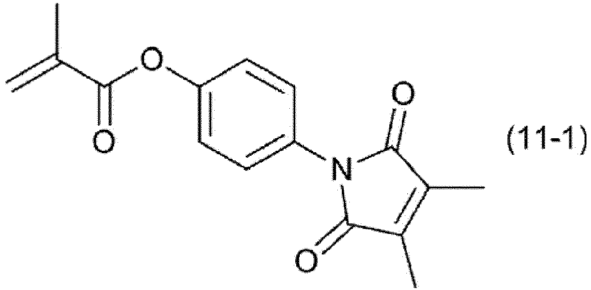

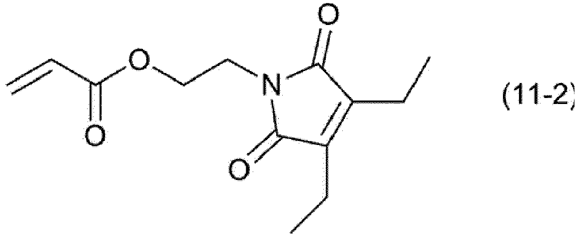

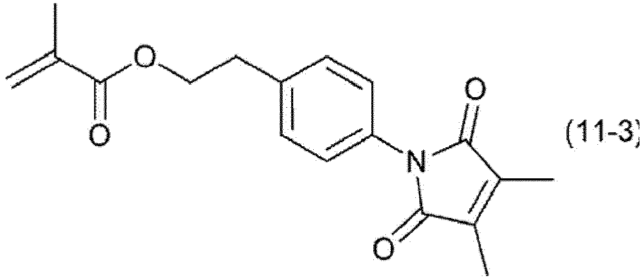

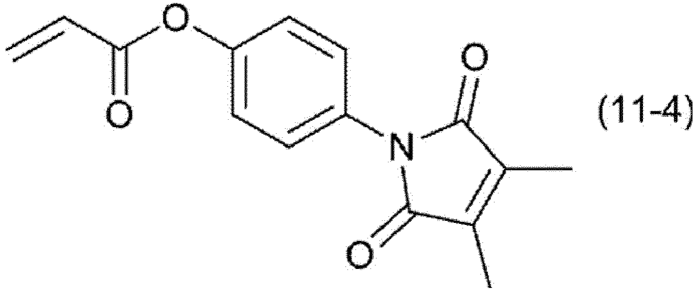

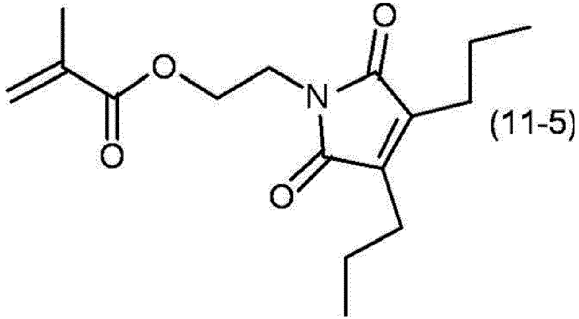

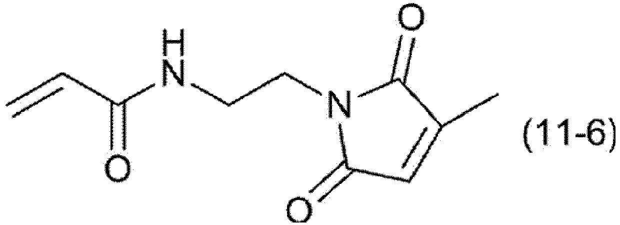

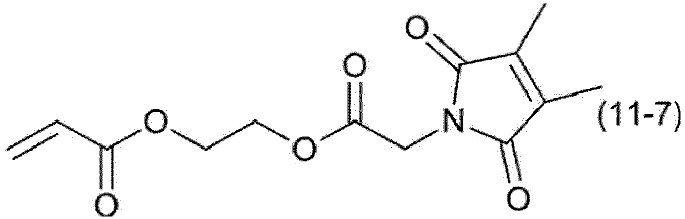

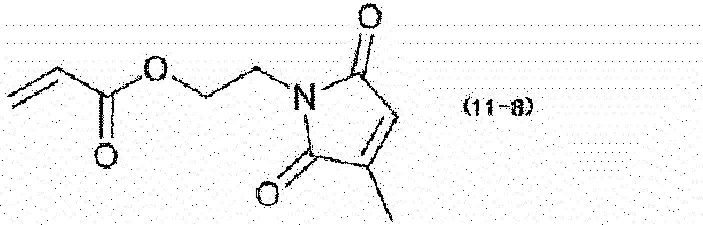

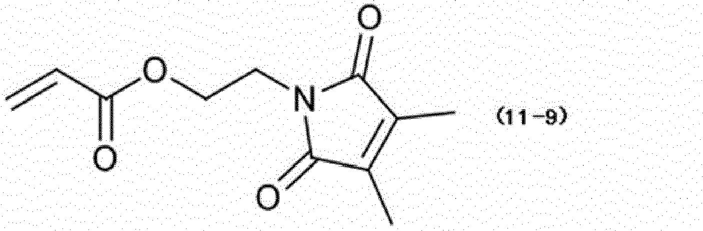

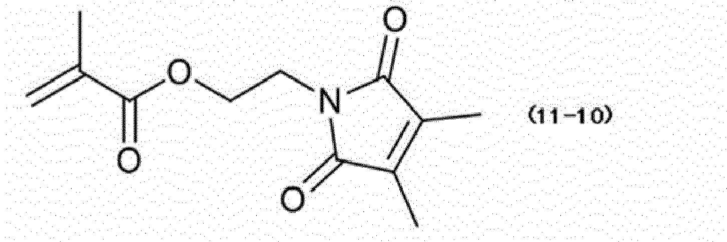

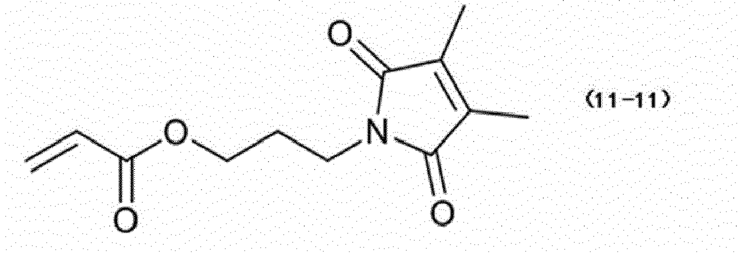

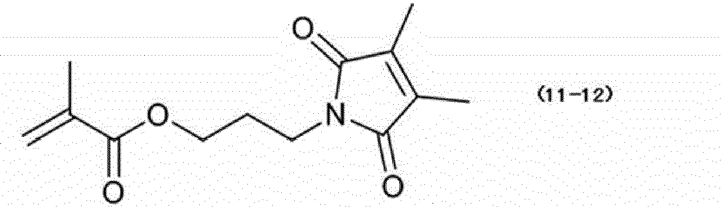

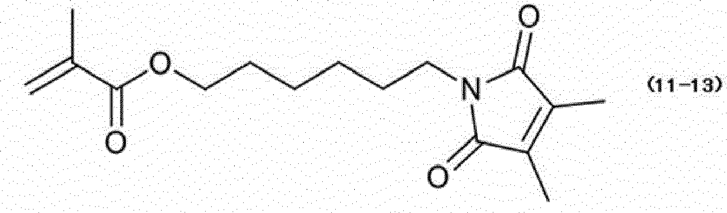

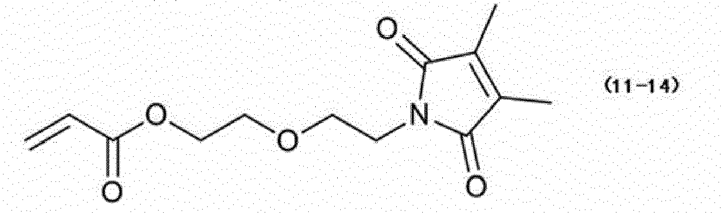

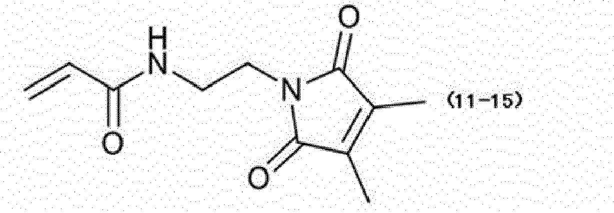

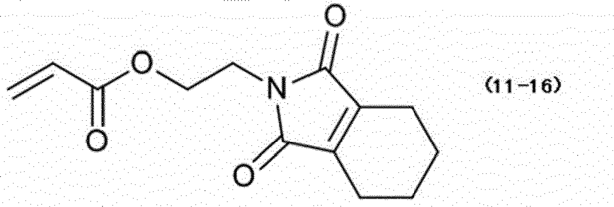

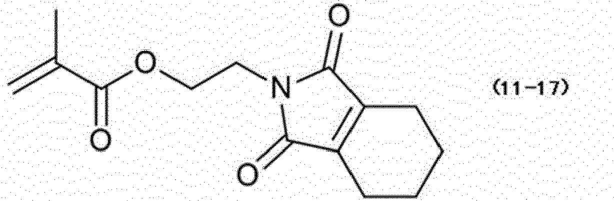

When the (component A) is a polymer compound having a weight average molecular weight of more than 5,000, the (component A) is preferably a polymer formed by polymerizing a compound represented by Formula (11), and the (component A) may be either a homopolymer or a copolymer formed with a compound other than Formula (11). In addition, the polymer may have a linear shape, a branched shape, or a block structure. When the (component A) is a copolymer formed with a compound other than Formula (11), examples of other compound include well-known monomers such as acrylic acid esters, methacrylic acid esters, acrylamides, methacrylamides, vinyl esters, styrenes, acrylonitrile, maleic anhydride, and maleic acid imide.

Examples of acrylic acid esters include methyl acrylate, ethyl acrylate, (n- or i-)propyl acrylate, n-butyl acrylate, isobutyl acrylate, sec-butyl acrylate, t-butyl acrylate, amyl acrylate, 2-ethylhexyl acrylate, dodecyl acrylate, chloroethyl acrylate, 2-hydroxyethyl acrylate, 2-hydroxypropyl acrylate, 5-hydroxypentyl acrylate, cyclohexyl acrylate, allyl acrylate, trimethylol propane monoacrylate, pentaerythritol monoacrylate, glycidyl acrylate, benzyl acrylate, methoxybenzyl acrylate, chlorobenzyl acrylate, 2-(p-hydroxyphenyl)ethyl acrylate, furfuryl acrylate, tetrahydrofurfuryl acrylate, phenyl acrylate, chlorophenyl acrylate, and sulfamoylphenyl acrylate.

Examples of methacrylic acid esters include methyl methacrylate, ethyl methacrylate, (n- or i-)propyl methacrylate, n-butyl methacrylate, isobutyl methacrylate, sec-butyl methacrylate, t-butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 5-hydroxypentyl methacrylate, cyclohexyl methacrylate, allyl methacrylate, trimethylol propane monomethacrylate, pentaerythritol monomethacrylate, glycidyl methacrylate, methoxybenzyl methacrylate, chlorobenzyl methacrylate, 2-(p-hydroxyphenyl)ethyl methacrylate, furfuryl methacrylate, tetrahydrofurfuryl methacrylate, phenyl methacrylate, chlorophenyl methacrylate, and sulfamoylphenyl methacrylate.

Examples of acrylamides include acrylamide, N-methyl acrylamide, N-ethyl acrylamide, N-propyl acrylamide, N-butyl acrylamide, N-benzyl acrylamide, N-hydroxyethyl acrylamide, N-phenyl acrylamide, N-tolyl acrylamide, N-(p-hydroxyphenyl)acrylamide, N-(sulfamoylphenyl)acrylamide, N-(phenylsulfonyl)acrylamide, N-(tolylsulfonyl)acrylamide, N,N-dimethyl acrylamide, N-methyl-N-phenyl acrylamide, and N-hydroxyethyl-N-methyl acrylamide.

Examples of methacrylamides include methacrylamide, N-methyl methacrylamide, N-ethyl methacrylamide, N-propyl methacrylamide, N-butyl methacrylamide, N-benzyl methacrylamide, N-hydroxyethyl methacrylamide, N-phenyl methacrylamide, N-tolyl methacrylamide, N-(p-hydroxyphenyl)methacrylamide, N-(sulfamoylphenyl)methacrylamide, N-(phenylsulfonyl)methacrylamide, N-(tolylsulfonyl)methacrylamide, N,N-dimethyl methacrylamide, N-methyl-N-phenyl methacrylamide, and N-hydroxyethyl-N-methyl methacrylamide.

Examples of vinyl esters include vinyl acetate, vinyl butyrate, and vinyl benzoate.

Examples of styrenes include styrene, methyl styrene, dimethyl styrene, trimethyl styrene, ethyl styrene, propyl styrene, cyclohexyl styrene, chloromethyl styrene, trifluoromethyl styrene, ethoxymethyl styrene, acetoxymethyl styrene, methoxy styrene, dimethoxy styrene, chloro styrene, dichloro styrene, bromo styrene, iodo styrene, fluoro styrene, and carboxy styrene.

Of those monomers, when the (component A) is a copolymer, it is preferable to form a copolymer with acrylic acid esters, methacrylic acid esters, vinyl esters, styrenes, or acrylonitrile.

When the (component A) is a polymer compound having a weight average molecular weight of more than 5,000, the (component A) is particularly preferably a polymer including a repeating unit represented by the following Formula (1a). 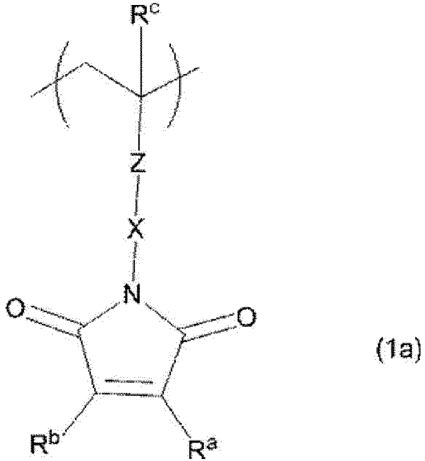 (in Formula (1a), R^{a} and R^{b} each independently represent a hydrogen atom or an alkyl group having 1 to 4 carbon atoms, and R^{a} and R^{b} may be bonded to each other to form a 4- to 6-membered alicyclic structure, and R^{a} and R^{b} do not represent a hydrogen atom at the same time. R^{c} represents a hydrogen atom or a methyl group. Z represents a single bond, -COO-* or -CONR^{d}-*, and R^{d} represents a hydrogen atom or an alkyl group having 1 to 4 carbon atoms. * represents a bonding site with X. X represents a group selected from the group consisting of an alkylene group, an arylene group, an aralkylene group, and an alkenylene group).

In Formula (1a), R^{a}, R^{b}, and R^{c} have the same definitions as those exemplified for R^{a}, R^{b}, and R^{c} in Formula (1) described above (including the preferred range), respectively.

In Formula (1a), X and Z have the same definitions as those exemplified with X and Z in Formula (11) described above (including the preferred range), respectively.

When the (component A) includes the repeating unit represented by Formula (1a), preferred examples of the (component A) include a polymer including the following repeating units (1a-1) to (1a-13), but the invention is not limited to these.

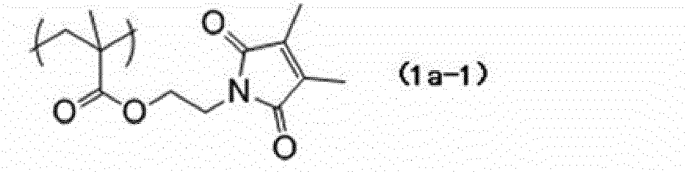

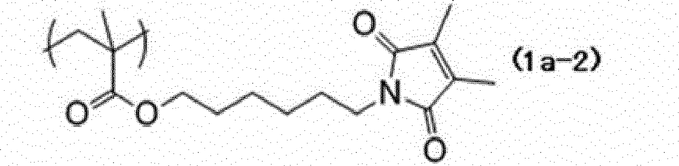

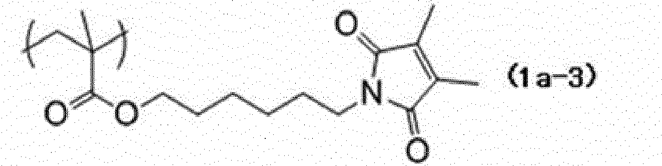

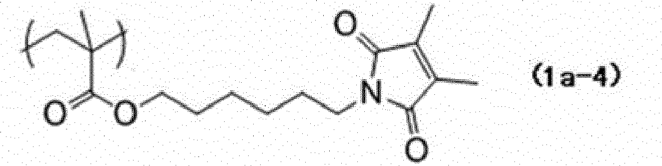

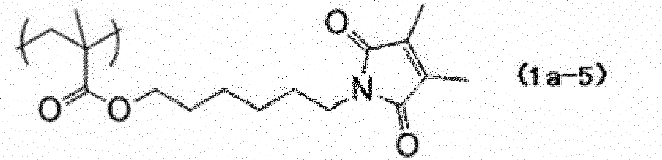

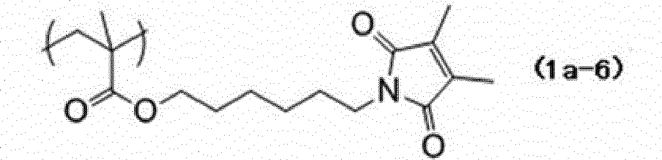

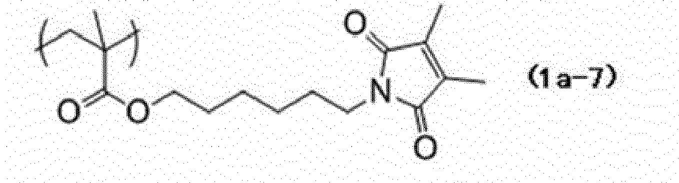

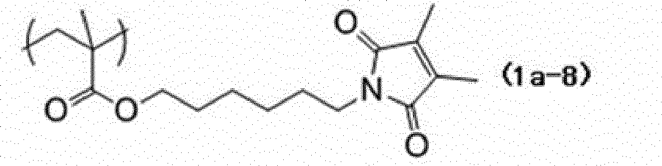

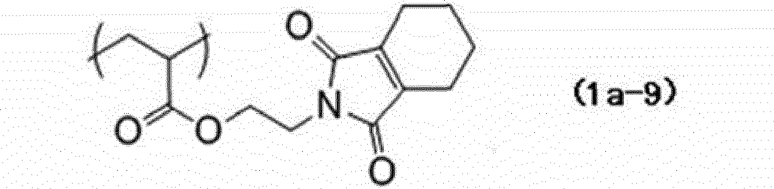

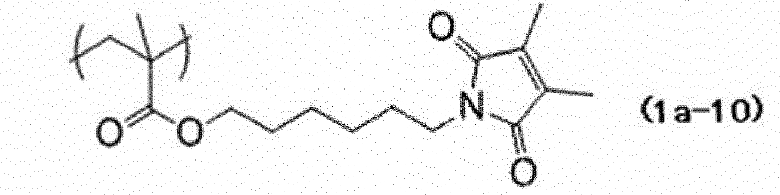

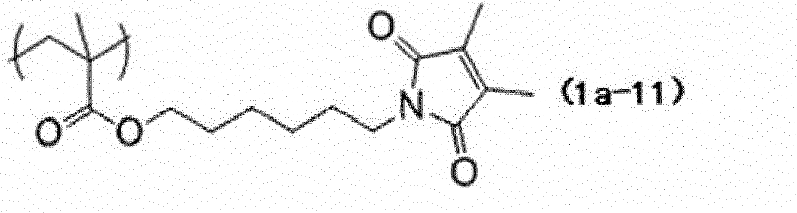

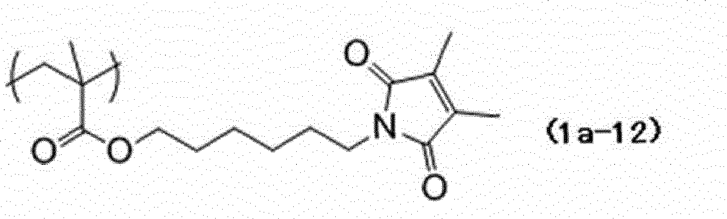

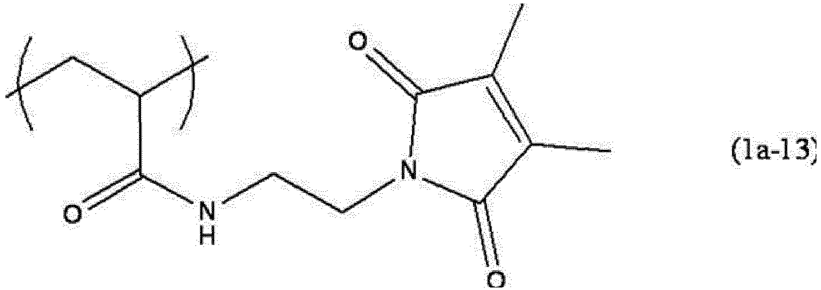

Preferred examples the (component A) in the invention in a case of the (component A) is a polymer include the following polymers. 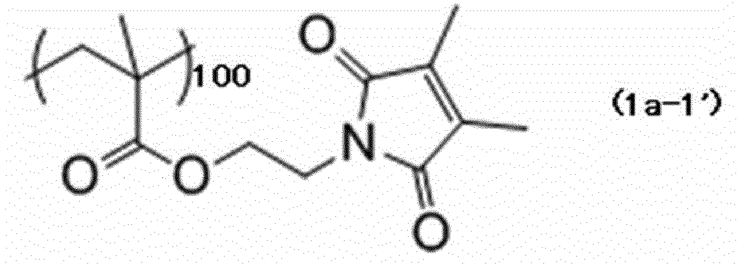 (weight average molecular weight: 14,000) 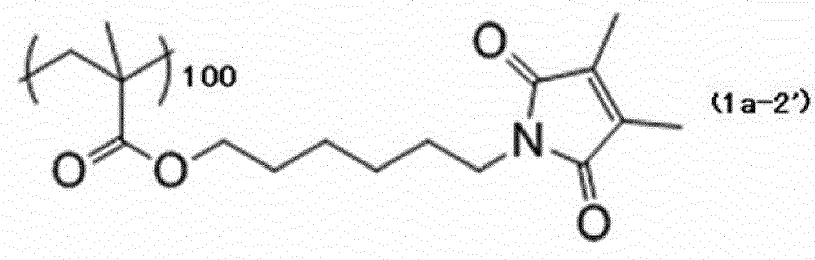 (weight average molecular weight: 18,000) 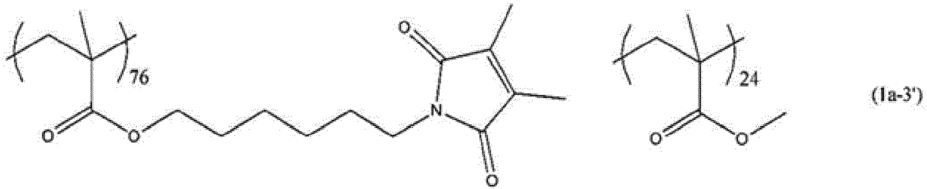 (weight average molecular weight: 19,000)

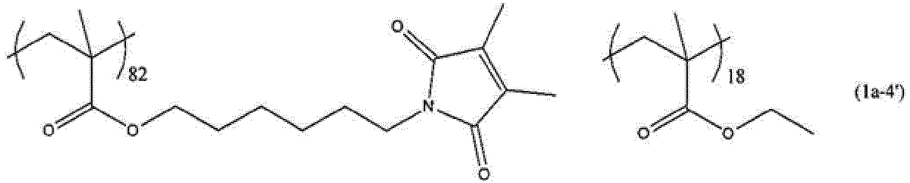

### (weight average molecular weight: 9,000)

The content of the (component A) in the ink composition of the invention is preferably from 0.1 to 20% by mass, more preferably from 1 to 15% by mass, and particularly preferably from 2 to 12% by mass, with respect to the ink composition.

### [(Component B1) monofunctional polymerizable compound]

The ink composition of the invention includes (component B1) a monofunctional polymerizable compound as an essential component. The monofunctional polymerizable compound used in the ink composition of the invention is not particularly limited as long as it is a polymerizable compound having one polymerizable group.

The monofunctional polymerizable compound used in the ink composition of the invention may be either a radical-polymerizable compound or a cationic polymerizable compound. However, a radical-polymerizable compound is preferable, and examples thereof include a radical-polymerizable compound having an ethylenically unsaturated bond. More specifically, it is enough that a compound includes, in a molecule thereof, at least one ethylenically unsaturated bond that is radically polymerizable.

Examples of the monofunctional polymerizable compound having an ethylenically unsaturated bond that is radically polymerizable include unsaturated carboxylic acids such as acrylic acid, methacrylic acid, itaconic acid, crotonic acid, isocrotonic acid, and maleic acid, unsaturated carboxylic acid esters and salts thereof; anhydrides having an ethylenically unsaturated group; acrylonitrile; and styrene.

Further examples thereof include macromonomers such as various unsaturated polyesters, unsaturated polyethers, unsaturated polyamides, and unsaturated polyurethanes.

Preferred examples of the monofunctional compound include a (meth)acrylate compound such as 2-hydroxyethyl acrylate, butoxyethyl acrylate, carbitol acrylate, cyclohexyl acrylate, tetrahydrofurfuryl acrylate, benzyl acrylate, tridecyl acrylate, 2-phenoxyethyl acrylate, N-methylol acrylamide, diacetone acrylamide, epoxyacrylate, isobornyl acrylate, dicyclopentenyl acrylate, dicyclopentenyloxyethyl acrylate, dicyclopentanyl acrylate, 2-hydroxy-3-phenoxypropyl acrylate, 2-acryloyloxyethylphthalic acid, methoxy-polyethylene glycol acrylate, 2-acryloyloxyethyl-2-hydroxyethylphthalic acid, cyclic trimethylol propane formal acrylate, 2-(2-ethoxyethoxy)ethyl acrylate, 2-methoxyethyl acrylate, 3-methoxybutyl acrylate, ethoxylated phenyl acrylate, 2-acryloyloxyethyl succinic acid, nonylphenol EO adduct acrylate, phenoxy-polyethylene glycol acrylate, 2-acryloyloxyethylhexahydrophthalic acid, lactone modified acrylate, stearyl acrylate, isoamyl acrylate, isomyristyl acrylate, isostearyl acrylate, or lactone modified acrylate;
a methacrylate compound such as methyl methacrylate, n-butyl methacrylate, allyl methacrylate, glycidyl methacrylate, benzyl methacrylate, or dimethylaminomethyl methacrylate;
an allyl compound such as allylglycidyl ether; and
a (meth)acrylamide compound such as (meth)acrylamide, N-methyl (meth)acrylamide, N-ethyl (meth)acrylamide, N-propyl (meth)acrylamide, N-isopropyl (meth)acrylamide, N-butyl (meth)acrylamide, N-sec-butyl (meth)acrylamide, N-tert-butyl (meth)acrylamide, N-cyclohexyl (meth)acrylamide, N-phenyl (meth)acrylamide, N,N-dimethyl (meth)acrylamide, 1-(meth)acryloylpyrrolidine, N-methylol (meth)acrylamide, N-methoxyethyl (meth)acrylamide, N-2-hydroxyethyl (meth)acrylamide, N-[3-dimethylaminopropyl](meth)acrylamide, N-1,1-dimethyl-3-oxobutyl (meth)acrylamide, or 4-acryloyl morpholine.

Furthermore, preferred examples thereof also include a monofunctional vinyl ether compound. Specific examples of the monofunctional vinyl ether compound include methyl vinyl ether, ethyl vinyl ether, n-propyl vinyl ether, isopropyl vinyl ether, n-butyl vinyl ether, isobutyl vinyl ether, t-butyl vinyl ether, n-octadecyl vinyl ether, 2-ethylhexyl vinyl ether, n-nonyl vinyl ether, dodecyl vinyl ether, octadecyl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethyl cyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, phenoxypolyethylene glycol vinyl ether, cyclohexane dimethanol monovinyl ether, and isopropenyl ether-O-propylene carbonate.

Furthermore, preferred examples thereof also include an N-vinyl compound such as N-vinyl lactams or N-vinyl formamide. Preferred examples of the N-vinyl compound are represented by the following formula.

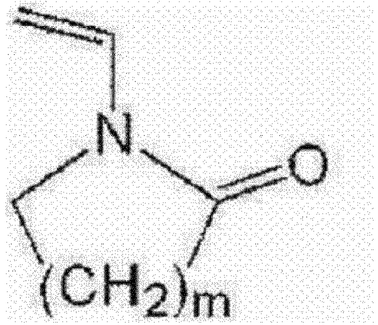

In the above formula, m represents an integer of from 1 to 5 and m is preferably an integer of from 2 to 4, m is more preferably 2 or 4, and it is particularly preferablethat m is 4, namely, m is N-vinyl caprolactam.

Of those described above, the monofunctional polymerizable compound in the invention is preferably an N-vinyl compound.

In the invention, a molecular weight of the (component B1) monofunctional polymerizable compound is preferably from 130 to 3000, and more preferably from 130 to 500.

The content of the (component B1) monofunctional polymerizable compound in the ink composition of the invention is preferably from 5% by mass to 90% by mass, more preferably from 20% by mass to 85% by mass, and particularly preferably from 35% by mass to 80% by mass, with respect to the ink composition.

### [(Component B2) polyfunctional polymerizable compound]

It is preferable that the ink composition of the invention further includes a polyfunctional polymerizable compound. The polyfunctional polymerizable compound which may be used in the ink composition of the invention is not particularly limited as long as it is a polymerizable compound having at least two polymerizable groups.

Examples of the radically polymerizable-polyfunctional compound include an acrylate compound such as bis(4-acryloxypolyethoxyphenyl)propane, tripropylene glycol diacrylate, polyethylene glycol diacrylate, polypropylene glycol diacrylate, dipentaerythritol tetraacrylate, trimethylol propane (PO modified) triacrylate, oligoester acrylate, hydroxypivalic acid neopentyl glycol diacrylate, tetramethylol methane triacrylate, dimethylol tricyclodecane diacrylate, modified glycerin triacrylate, bisphenol A diglycidyl ether acrylic acid adduct, modified bisphenol A diacrylate, PO adduct diacrylate of bisphenol A, EO adduct diacrylate of bisphenol A, dipentaerythritol hexaacrylate, propylene glycol diglycidyl ether acrylic acid adduct, or ditrimethylol propane tetraacrylate; and

a methacrylate compound such as polyethylene glycol dimethacrylate or polypropylene glycol dimethacrylate 2,2-bis(4-methacryloxypolyethoxyphenyl)propane.

Further, examples thereof also include an allyl compound such as diallyl phthalate or triallyl trimellitate.

PO represents propylene oxide and EO represents ethylene oxide.

Examples thereof also include polyfunctional vinyl ether. Examples of the polyfunctional vinyl ether include divinyl ethers such as ethylene glycol divinyl ether, diethylene glycol divinyl ether, triethylene glycol divinyl ether, polyethylene glycol divinyl ether, propylene glycol divinyl ether, dipropylene glycol divinyl ether, butylene glycol divinyl ether, butanediol divinyl ether, hexanediol divinyl ether, cyclohexane dimethanol divinyl ether, bisphenol A alkylene oxide divinyl ether, and bisphenol F alkylene oxide divinyl ether; and
polyfunctional vinyl ethers such as trimethylol ethane trivinyl ether, trimethylol propane trivinyl ether, ditrimethylol propane tetravinyl ether, glycerin trivinyl ether, pentaerythritol tetravinyl ether, dipentaerythritol pentavinyl ether, dipentaerythritol hexavinyl ether, ethylene oxide added trimethylol propane trivinyl ether, propylene oxide added trimethylol propane trivinyl ether, ethylene oxide added ditrimethylol propane tetravinyl ether, propylene oxide added ditrimethylol propane tetravinyl ether, ethylene oxide added pentaerythritol tetravinyl ether, propylene oxide added pentaerythritol tetravinyl ether, ethylene oxide added dipentaerythritol hexavinyl ether, and propylene oxide added dipentaerythritol hexavinyl ether.

Further, as a polyfunctional polymerizable compound that is radically polymerizable, active energy ray-curable polymerizable compounds that are used in the polymerizable compound described in publications of JP-A No. 7-159983, Japanese Patent Application Publication (JP-B) No. 7-31399, JP-A No. 8-224982, JP-A No. 10-863, JP-A No. 9-134011, or Japanese Patent Application National Publication (Laid-Open) No. 2004-514014 are known, and these may also be used in the ink composition of the invention.

A molecular weight of the polyfunctional polymerizable compound is preferably from 130 to 3000, and more preferably from 130 to 500.

The content of the polyfunctional polymerizable compound in the ink composition is preferably 75% by mass or less, more preferably from 0.1 % by mass to 60% by mass, and particularly preferably from 0.5% by mass to 50% by mass, with respect to the ink composition.

A total content of the (component B1) and the (component B2), which may be included if required, in the ink composition of the invention is preferably from 50% by mass to 90% by mass, more preferably from 60% by mass to 85% by mass, and particularly preferably from 65% by mass to 80% by mass, with respect to the ink composition.

The content of the (component B1) the monofunctional polymerizable compound with respect to all polymerizable compounds in the ink composition of the invention (a total content of the (component B1) the monofunctional polymerizable compound and the (component B2) polyfunctional polymerizable compound, which may be included if required) is preferably from 50 to 99.5% by mass, more preferably from 55 to 98% by mass, and particularly preferably from 60 to 95% by mass.

### [(Component C) coloring material]

The ink composition for inkjet recording according to the invention includes (component C) a coloring material.

The coloring material which may be used in the invention is preferably a coloring material that is formed from an organic pigment.

As the organic pigment which may be used in the invention, for example, the organic pigments of the following numbers that are described in Color Index may be used.

Examples of a red or magenta pigment include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36.

Examples of a blue or cyan pigment include Pigment Blue 1, 15, 15:1, 15:2, 15:3, 15:4, 15:6, 16, 17-1, 22, 27, 28, 29, 36, and 60.

Examples of a green pigment include Pigment Green 7, 26, 36, and 50.

Examples of a yellow pigment include Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, 193, and 213.

Examples of a black pigment include Pigment Black 7, 28, and 26.

The pigments may be appropriately selected and used depending on the purpose.

The coloring material which may be used in the invention is preferably subjected to a dispersion treatment after added into the ink composition of the invention such that the coloring material is suitably dispersed in the corresponding ink. For dispersing the coloring material that is formed from an organic pigment, various dispersers such as a ball mill, a sand mill, an attritor, a roll mill, an agitator, a Henschel mixer, a colloid mill, an ultrasonic homogenizer, a pearl mill, a wet jet mill, and a paint shaker can be used, for example.

Further, it is also possible to add a dispersant when dispersing an organic pigment. Although types of the dispersant are not particularly limited, it is preferable to use a polymer dispersant. Examples of the polymer dispersant include SOLSPERSE series manufactured by Noveon and AJISPER series manufactured by Ajinomoto Fine-Techno Co., Inc. As a dispersion aid, a synergist may be used according to the type of pigment. In the invention, the dispersant and dispersion aid are added preferably in an amount of from 1 to 50 parts by mass with respect to 100 parts by mass of the coloring material.

The coloring material that is formed from an organic pigment may be mixed by direct addition together with each component when the ink composition of the invention is prepared. However,for improving a dispersion property, the coloring material that is formed frm an organic pigment is added in advance to a dispersion medium such as a solvent, a specific heterocyclic compound in the invention, or other polymerizable compound which may be used in combination if necessary, dispersed or dissolved homogeneously, and then mixed.

One type or two or more types of the coloring material that is formed from an organic pigment may be suitably selected and used depending on purpose of use of the ink composition.

When a coloring material such as pigment, which is present in a solid state, is used in the ink composition of the invention, the coloring material, dispersant, and dispersion medium are selected and dispersion condition and filtration condition are set such that the average particle diameter of the coloring material particles is preferably from 0.005 to 0.5 µm, more preferably from 0.01 to 0.45 µm, and still more preferably from 0.015 to 0.4 µm.

The content of the coloring material that is formed from an organic pigment in the ink composition of the invention is suitably selected depending of purpose of use of the ink composition. However, considering physical properties and coloring property of the composition, generally, it is preferably from 0.5 to 10% by mass, and more preferably from 1 to 8% by mass, with respect to the total mass of the ink composition.

In addition to the essential components described above, the ink composition of the invention may also include other components for improving physical properties or the like within the range that the effect of the invention is not adversely affected.

Hereinbelow, these optional components are described.

### [Polymerization initiator]

The ink composition of the invention may include a polymerization inhibitor when necessary, although it is not necessarily required to include a polymerization initiator in addition to the essential components described above. The polymerization initiator can be any one of a thermal polymerization initiator and a photopolymerization initiator. However, a photopolymerization initiator is preferable.

As for the photopolymerization initiator, a known photopolymerization initiator may be suitably selected and used, depending on the type of a polymerizable compound used in combination and purpose of use of the ink composition.

The photopolymerization initiator used in the ink composition of the invention is a compound which absorbs external energy (light) and generates a polymerization initiating species. As the photopolymerization initiator, a known compound can be used. In the photopolymerization initiator, the light for initiating polymerization indicates active energy ray, that is, y ray, β ray, electronic beam, ultraviolet ray, visible ray, and infrared ray, and preferably ultraviolet ray.

Examples of the photopolymerization initiator which may be preferably used in the invention include aromatic ketones, acyl phosphine oxide compounds, aromatic onium salt compound, organic peroxides, thio compounds, hexaaryl biimidazole compounds, ketooxime ester compounds, borate compounds, azinium compounds, metallocene compounds, active ester compounds, compounds having a carbon-halogen bond, and alkylamine compounds.

In the invention, when a photopolymerization initiator is used, the photopolymerization initiator may be used singly or two or more thereof may be used in combination. From the viewpoint of the effect, it is preferable to use two or more radical polymerization initiators in combination. From the viewpoint of curability of the ink composition, aromatic ketones and acyl phosphine oxide compounds are preferable, as a photopolymerization initiator. In addition, when two or more photopolymerization initiators are used in combination, for example, preferred examples of the combination include a combination of aromatic ketones and acyl phosphine oxide compounds.

In the invention, the content of the photopolymerization initiator is preferably 5% by mass or less, more preferably 3% by mass or less, and still more preferably 1% by mass or less, with respect to the total mass of the ink composition.

### [Sensitizing pigment]

A sensitizing pigment may be added to the ink composition of the invention, for a purpose of promoting a photoreaction by irradiation of active energy ray. The sensitizing pigment absorbs specific active energy ray to be in an electronically- excited state. The sensitizing pigment which is in an electronically-excited state contacts the polymerization initiator to cause an action such as an energy transfer or the like, as a result of which, a photoreaction is promoted.

Preferred examples of the sensitizing pigment include those that belong to the following compounds and that have an absorption wavelength in a region of from 350 nm to 450 nm.

Examples thereof include polynuclear aromatics (for example, anthracene, pyrene, perylene, and triphenylene), thioxantones (for example, isopropyl thioxantones), xanthenes (for example, fluorescein, eosin, erythrosin, rhodamine B, and rose bengal), cyanines (for example, thiacarbocyanine and oxacarbocyanine), merocyanines (for example, merocyanine and carbomerocyanine), thiazines (for example, thionine, methylene blue, and toluidine blue), acridines (for example, acridine orange, chloroflavine, and acriflavine), anthraquinones (for example, anthraquinone), squaryliums (for example, squarylium), and coumarins (for example, 7-diethylamino-4-methyl coumarin), and preferred examples thereof include thioxantones and merocyanines.

### [Co-sensitizer]

The ink composition of the invention may also include a co-sensitizer. In the invention, the co-sensitizer has a function that sensitivity of a sensitizing pigment to active energy ray is further improved, the polymerization inhibition of a polymerizable compound by oxygen is suppressed, or the like.

Examples of the co-sensitizer include amines, for example, compounds such as those described in "Journal of Polymer Science" vol. 10, p 3173 (1972), written by M. R. Sander et al., JP-B No. 44-20189, JP-A No. 51-82102, JP-A No. 52-134692, JP-A No. 59-138205, JP-A No. 60-84305, JP-A No. 62-18537, JP-A No. 64-33104, and Research Disclosure No. 33825. Specific examples of the co-sensitizer include triethanolamine, p-dimethylamino benzoic acid ethyl ester, p-formyl dimethylaniline, and p-methylthiodimethylaniline.

Other examples of the co-sensitizer include thiols and sulfides, such as thiol compounds as those described in JP-A No. 53-702, JP-B No. 55-500806, and JP-A No. 5-142772 and disulfide compounds described in JP-A No. 56-75643. Specific examples thereof include 2-mercaptobenzothiazole, 2-mercaptobenzoxazole, 2-mercaptobenzoimidazole, 2-mercapto-4(3H)-quinazoline, and β-mercaptonaphthalene.

Further, other examples of the co-sensitizer include amino acid compounds (such as N-phenyl glycine), organic metal compounds as those described in JP-B No. 48-42965 (such as tributyl tin acetate), hydrogen donating compounds such as those described in JP-B No. 55-34414, sulfur compounds such as those described in JP-A No. 6-308727 (such as trithiane), phosphorus compounds such as those described in JP-A No. 6-250387 (such as diethylphosphite), and Si-H compounds and Ge-H compounds such as those described in JP-A No. 8-65779.

The ink composition of the invention may further include other various components, if necessary. Examples of other various components include a polymerization inhibitor and a solvent.

The polymerization inhibitor may be added from the viewpoint of increasing the preservability. Moreover, the ink composition of the invention is preferably heated within a range of from 40 to 60°C, the viscosity is reduced, and then the ink composition of the invention is jetted, and a polymerization inhibitor is preferably added in order to prevent clogging of the head due to the thermal polymerization. It is preferred that the polymerization inhibitor is added in an amount of from 200 to 20,000 ppm with respect to the total amount of the ink composition of the invention. Examples of the polymerization inhibitor include hydroquinone, benzoquinone, p-methoxyphenol, TEMPO, TEMPOL, and N-nitrosophenylhydroxylamine salt represented by cupferron Al.

The ink composition of the invention may include a solvent, if necessary. Examples of the solvent which may be used in the invention include an organic solvent and water. Preferable examples of the preferably used solvent include propylene carbonate, dimethyl succinate, dimethyl glutarate, dimethyl adipate and mixtures thereof.

Amount of the organic solvent is, for example, within a range of from 0.1 to 5% by mass, and preferably from 0.1 to 3% by mass, with respect to the total amount of the ink composition of the invention.

In addition to those described above, a known compound may be added to the ink composition of the invention, if necessary. For example, a surfactant, a leveling addition agent, a matting agent; and a polyester resin, a polyurethane resin, a vinyl resin, an acrylic resin, a rubber resin, and waxes for adjusting the physical property of a film, and an antifoaming agent may be suitably selected and added. Furthermore, it is also preferable that a tackifier which does not inhibit the polymerization is added to improve the adhesiveness onto the recording medium such as polyolefin or PET. Specific examples thereof include tacky polymers having a high molecular weight described in JP-A No. 2001-49200, pages 5 to 6 (for example, a copolymer formed from an ester of (meth)acrylic acid and alcohol including an alkyl group having 1 to 20 carbon atoms, an ester of (meth)acrylic acid and alicyclic alcohol having 3 to 14 carbon atoms, and an ester of (meth)acrylic acid and aromatic alcohol having 6 to 14 carbon atoms), and low molecular weight-tackiness-imparting resins having a polymerizable unsaturated bond.

The present inventors have found that the effect of the invention is obtained by the ink composition of the invention which includs the (component A), the (component B1), and the (component C) described above. Although the mechanism is not indentified, the present inventors assumed as follows.

That is, it is thought that the (component A) promotes curing of the composition as a cross-linking compound at the same time as the (component A) functions as an initiator, and thus uniformity of the composition after curing is improved and the blocking resistance is improved. Further, it is thought that, by having a substituent group such as an alkyl group or the like on a reactive double bond of the maleimide structure represented by Formula (1), the curing property is suitably controlled during jetting of the ink composition so that physical properties of the cured film is improved, and thus the blocking resistance and jetting property are improved accordingly. However, the mechanisms described above are only an assumption, and the invention is not limited to these.

### [Properties of ink composition]

Preferred physical properties of the ink composition of the invention are described.

The viscosity of the ink composition of the invention at a temperature when jetting (for example, from 20 to 60°C, and preferably from 25 to 50°C) is preferably from 5 to 30 mPa·s, and more preferably from 7 to 25 mPa·s, in view of the jetting property. For example, the viscosity of the ink composition of the invention at a room temperature (for example, from 25 to 30°C) is preferably from 6 to 30 mPa·s, and more preferably from 8 to 25 mPa·s. The viscosity of the ink composition is measured, for example, under the condition at 25°C using VISCOMETER TV-22 (manufactured by TOKI SANGYO Co., Ltd.).

It is preferable that a compositional ratio of the ink composition of the invention is suitably adjusted such that the viscosity of the ink composition is within the above range.

By setting the viscosity high at room temperature, ink permeation into a recording medium is avoided even when a porous recording medium is used, and thus uncured monomer can be reduced and malodor can be suppressed. In addition, as ink bleeding at the time of jetting of liquid ink droplets is prevented, as a result of which, the image quality is improved.

Surface tension of the ink composition of the invention at 25°C is preferably from 17 to 35 mN/m, and more preferably from 20 to 32 mN/m. When recording is performed on various recording media such as polyolefin, PET, coated paper, and non-coated paper, the surface tension is preferably 20 mN/m or more from the viewpoint of bleeding and permeation, and preferably 32 mN/m or less from the viewpoint of wettability. The surface tension is measured under the condition at 25°C using AUTOMATIC SURFACE TENSIOMETER CBVP-Z (manufactured by Kyowa Interface Science Co., Ltd.), for example.

### [Image forming method]

The image forming method of the invention includes an ink application process of applying the ink composition onto a recording medium, and an irradiation process of irradiating the applied ink composition with an active energy ray.

### <Ink application process>

Hereinbelow, the ink application process in the image forming method in the invention is further described. The ink application process in the invention is not particularly limited as long as it is a process in which the ink composition is applied onto a recording medium.

An inkjet recording device used for the image forming method of the invention is not particularly limited, and a known inkjet recording device which can achieve the intended resolution may be arbitraily selected and used. That is, as long as the inkjet recording device is any known inkjet recording device including commercially avairable products, the application of the ink composition onto a recording medium in the image forming method of the invention can be performed.

Examples of the inkjet recording device that can be used in the invention include a device having an ink supply system, a temperature sensor, and a heating part.

The ink supply system includes, for example, a main tank containing the ink composition of the invention, a supply tube, an ink supply tank immediately before an inkjet head, a filter, and a piezo type inkjet head. The piezo type inkjet head may be operated such that the piezo type inkjet head jets multiplesiz dots of preferably from 1 to 100 pl, and more preferably from 8 to 30 pl, with a resolution of preferably from 320 x 320 to 4,000 x 4,000 dpi, more preferably from 400 x 400 to 1,600 xx 1,600 dpi, and even more preferably 720 x 720 dpi. The dpi referred herein means the number of dots per 2.54 cm.

The ink composition of the invention to be jetted preferably has a constant temperature. Therefore, the inkjet recording device preferably includes a part for stabilizing the temperature of the ink composition. A section to be controlled to have a constant temperature includes all of the tubes and the members, from an ink tank (an intermediate tank, if any) to a nozzle jetting face. That is, the section from the ink supply tank to the inkjet head may be insulated and heated.

The method for controlling temperature is not particularly limited. However, for example, it is preferred that plural temperature sensors be placed on respective tube parts, and controlling of heating is performed according to the flow rate of the ink composition and the environmental temperature. The temperature sensor can be placed near the ink supply tank and the inkjet head nozzle. The head unit to be heated is preferably thermally blocked or insulated such that the device itself is not influenced by the temperature of the external air. In order to reduce the time for starting up the printer required for heating, or reduce the loss of thermal energy, it is preferred that the head unit be thermally insulated from other units, and the heat capacity of the entire heating unit be reduced.

The temperature of the ink composition at jetting is preferably constant. The control range of the temperature of the ink composition is preferably ±5°C of the set temperature, more preferably ±2°C of the set temperature, and even more preferably ±1°C of the set temperature.

In the invention, the recording medium is not particularly limited, and a known recording medium as a support or a recording material may be used. Examples of the recording medium include paper, paper laminated with plastics (for example, polyethylene, polypropylene, and polystyrene), a metal plate (for example, aluminum, zinc, and copper), a plastic film (for example, polyvinyl chloride resin, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinyl acetal), and paper or a plastic film, laminated with or deposited with any of the above-described metals. Since the ink composition of the invention has excellent adhesion, the ink composition of the invention can be preferable used for an unabsorbent recording medium as a recording medium, and among them, a plastic base material such as polyvinyl chloride, polyethylene terephthalate, or polyethylene is preferred, a polyvinyl chloride resin base material is more preferred, and a polyvinyl chloride resin sheet or film is even more preferred.

### <Irradiation process>

Hereinbelow, the irradiation process in the image forming method of the invention is described. The irradiation process in the invention is not particularly limited as long as it is a process of irradiating the ink composition applied onto the above-described recording medium with an active energy ray.

Examples of the active energy ray that may be used in the irradiation process include an ultraviolet ray (hereinafter, may be referred to as UV ray), visible light, and an electron beam, and UV ray is preferably used.

The peak wavelength of the UV ray may vary depending on the absorption characteristics of the sensitizing pigment that is used as necessary, however, is preferably from 200 to 405 nm, more preferably from 250 to 405 nm, and even more preferably from 250 to 390 nm, for example.

The output of the UV ray is preferably 2,000 mJ/cm² or less, more preferably from 10 mJ/cm² to 2,000 mJ/cm², even more preferably from 20 mJ/cm² to 1,000 mJ/cm², and particularly preferably from 50 mJ/cm² to 800 mJ/cm².

In addition, it is suitable that the UV ray is applied such that the irradiation of the exposed surface is from 10 mW/cm² to 2,000 mW/cm², and preferably from 20 mW/cm² to 1,000 mW/cm², for example.

The UV ray source that is commonly used is a mercury lamp, a gas/solid laser, and the like, and a mercury lamp and a metal halide lamp are widely known. Substitution with a GaN semiconductor ultraviolet emitting device is industrially and environmentally very useful, and LEDs (UV-LEDs) and LDs (UV-LDs) are expected as UV ray sources, because they have a compact size, a long life, a high efficiency, and provide a low cost.

It is suitable that the ink composition of the invention is irradiated with the UV ray for a period of, for example, from 0.01 seconds to 120 seconds, and preferably from 0.1 seconds to 90 seconds.

The irradiation conditions and basic irradiation method are described in JP-A No. 60-132767. Specifically, a so-called shuttle system of performing scanning with a head unit and a light source which is installed at both sides of the head unit including the ink jetting device and a system using a light source that is non-driven and using a light source that is non-driven are preferred. The irradiation of the active energy ray is carried out after jetting and heat-fixing of ink, at an interval of a certain period of time (for example, from 0.01 seconds to 60 seconds, preferably from 0.01 seconds to 30 seconds, and more preferably from 0.01 seconds to 15 seconds).

### EXAMPLES

Hereinafter, the present invention is more specifically described with reference to examples, but the present invention is not limited to these examples. Unless specifically otherwise noted, "parts" are all based on "parts by mass."

### [Example 1]

Components described below were stirred by a high-speed water cooling type agitator to obtain a magenta color-ink composition.

(Magenta color-ink composition)

| | |
|---|---|
| · compound (11-14) ((component A), structure shown below) | 6.4 parts |
| · monofunctional acrylate ((component B1), manufactured by Sartomer, SR531, (cyclic trimethylol propane formal acrylate)) | 13 parts |
| · monofunctional acrylate ((component B1), manufactured by Sartomer, SR339, (2-phenoxyethyl acrylate)) | 34 parts |
| · N-vinyl caprolactam | 15.0 parts |
| ((component B1), V-CAP, manufactured by ISP Japan) | |
| · bifunctional acrylate ((component B2), manufactured by Sartomer, SR9045, (alkoxylated neopentyl glycol diacrylate)) | 20.7 parts |
| · polyfunctional acrylate ((component B2), manufactured by Sartomer, SR399, (dipentaerythritol pentaacrylate)) | 1 part |
| · RAPI-CURE DVE-3 ((component B2), vinyl ether compound, manufactured by ISP Europe)) | 4 parts |
| · SOLSPERSE 32000 (dispersant, manufactured by Noveon) | 1.2 parts |
| · CINZUASIA MAZENTA RT-355D | 3.6 parts |
| ((component C), pigment, manufactured by BASF Japan) | |
| · FIRSTCURE ST-1 (polymerization inhibitor, manufactured by Chem First) | |
| | 0.05 parts |
| · DAROCUR ITX | 1 part |
| (sensitizing agent, manufactured by BASF Japan) | |
| · BYK 307 (antifoaming agent, manufactured by BYK Chemie) | 0.05 parts |

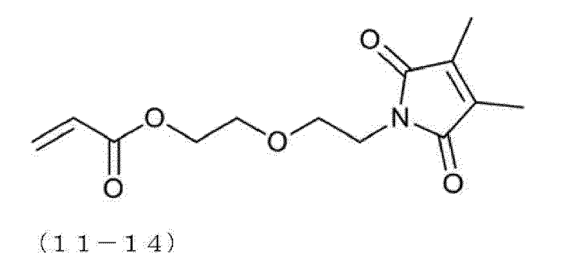

### (Evaluation of ink composition)

The obtained magenta color-ink composition was applied onto polyvinyl chloride sheet (AVERY (R) 400, manufactured by Avery Dennison Japan K.K.) as a recording medium using an inkjet recording device (LUXEL JET UV350GTW, manufactured by Fujifilm Corporation) having a piezo type inkjet head,at a quality mode without using an UV lamp to form a solid image. After jetting the ink composition, the composition was irradiated with light of a low-pressure mercury lamp (UVO-CLEANER MODEL 42, manufactured by JELIGHT COMPANY), thereby curing the ink and obtaining printed matter.

Thereafter, the evaluation was made according to the following criteria. The obtained evaluation results are shown in the Table 1.

### <Evaluation of blocking resistance>

An unprinted recording medium was prepared, and then the recording medium to which the ink composition was applied and the unprinted recording medium were superposed on each other. Breaking of a film on the printed surface or presence or absence of transfer to a base surface was evaluated at the time of peeling after a certain period of time.

Further, as for the printed matter used for blocking test, those exposed with light exposure energy of about 2,000 mJ/cm² were used. Further, storing the printed matter was performed for 48 hours (stored in an incubator at 45°C) in a condition in which even load (1.5 kg/cm²) of a weight was applied to entire printed matter in which the printed surface and the base surface was superposed on each other. After 48 hours, the printed surface and the base surface were detached from each other, and evaluation was made with the naked eye according to the following criteria.

### - Criteria -

3: There was no film breaking or the like on the printed surface and no ink transfer to the base surface.

2: Film breaking or internal film rupture was observed in part of the printed surface, or ink transfer was observed in part of the base surface (here, the term "part" means an area of less than 50% in the whole area)

1: Film breaking or internal film rupture was observed all over the printed surface, or ink transfer was observed all over the base surface (here, the term "part" means an area of 50% or more in the whole area)

### <Jetting stability>

After the obtained ink composition was stored for 4 weeks at 45°C and for 1 week at -15°C, recording on a recording medium was performed using the inkjet recording device having a piezo type inkjet nozzle. Presence or absence of dot omission and ink scattering were observed with the naked eye after continuous printing for 1 hour at room temperature, and average value obtained by repeating the measurement for three times was evaluated according to the following criteria. The results are shown in the following Table 1. "A" and "B" are recognized as practically admissible level and "C" and "D" are recognized as practically problematic level.

### - Criteria -

A: No occurrence of dot omission or ink scattering, or occurrence in less than 1 region.

B: Occurrence of dot omission or ink scattering in 1 region or more but less than 2 regions.

C: Occurrence of dot omission or ink scattering in 2 regions or more but less than 6 regions.

D: Occurrence of dot omission or ink scattering in 6 or more regions.

### [Example 2]

Components described below were stirred by a high speed water cooling type agitator to obtain a yellow color-ink composition.

(Yellow color-ink composition)

| | |
|---|---|
| · polymer (1a-2') ((component A), structure shown below) | 5.9 parts |
| · monofunctional acrylate ((component B1), manufactured by Sartomer, SR531) | 22 parts |
| · monofunctional acrylate ((component B1), manufactured by Sartomer, SR339) | 41 parts |
| · monofunctional acrylate ((component B1), manufactured by Sartomer, SR489) | 21 parts |
| · polyfunctional acrylate ((component B2), manufactured by Sartomer, SR399, (dipentaerythritol pentaacrylate)) | 1.0 part |
| · RAPI-CURE DVE-3 | 4.0 parts |
| ((component B2), vinyl ether compound, manufactured by ISP Europe) | |
| · SOLSPERSE 32000 (dispersant, manufactured by Noveon) | 0.4 parts |
| · CROMOPHTAL YELLOW LA | 3.6 parts |
| ((component C), pigment, manufactured by BASF Japan) | |
| · FIRSTCURE ST-1 (polymerization inhibitor, manufactured by Chem First) | 0.05 parts |
| · DAROCUR ITX | 1.0 part |
| (sensitizing agent, manufactured by BASF Japan) | |
| · BYK 307 (antifoaming agent, manufactured by BYK Chemie) | 0.05 parts |
| 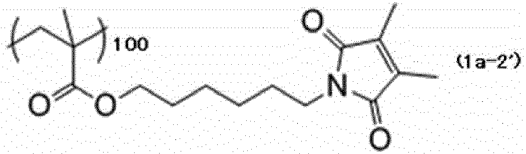 | |
| (weight average molecular weight: 18,000) | |

The obtained yellow color-ink composition of Example 2 was jetted to a polyvinyl chloride sheet and cured, in the same manner as in Example 1. Then, it was evaluated in the same manner as in Example 1. The results are shown in the Table 1.

### [Example 3]

Components described below were stirred by a high speed water cooling type agitator to obtain a black color-ink composition.

(Black color-ink composition)

| | |
|---|---|
| · polymer (1a-2') (structure shown below) | 6.3 parts |
| (weight average molecular weight: 18,000, structure shown below) | |
| · monofunctional acrylate ((component B1), manufactured by Sartomer, SR531) | 14 parts |
| · N-vinyl caprolactam | 15.0 parts |
| ((component B1), V-CAP, manufactured by ISP Japan) | |
| · monofunctional acrylate ((component B1), manufactured by Sartomer, CD420) | 39.0 parts |
| · polyfunctional acrylate ((component B2), manufactured by Sartomer, SR9045) | 18.6 parts |
| · polyfunctional acrylate ((component B2), manufactured by Sartomer, SR399) | 3 parts |
| · SOLSPERSE 32000 (dispersant, manufactured by Noveon) | 1.2 parts |
| · MICROLITH BLACK C-K | 2.6 parts |
| ((component C), pigment, manufactured by BASF Japan) | |
| · FIRSTCURE ST-1 (polymerization inhibitor, manufactured by Chem First) | 0.05 parts |
| · DAROCUR ITX | 0.2 parts |
| (sensitizing agent, manufactured by BASF Japan) | |
| · BYK 307 (antifoaming agent, manufactured by BYK Chemie) | 0.05 parts |
| 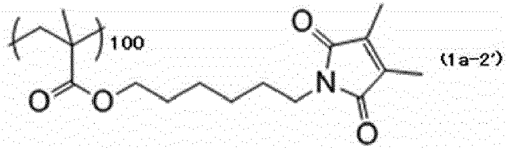 | |
| (weight average molecular weight: 18,000) | |

The obtained black color-ink composition of Example 3 was jetted to a polyvinyl chloride sheet and cured, in the same manner as in Example 1. Then, it was evaluated in the same manner as in Example 1. The results are shown in the Table 1.

### [Example 4]

Components described below were stirred by a high speed water cooling type agitator to obtain a yellow color-ink composition.

(Yellow color-ink composition)

| | |
|---|---|
| · polymer (1a-2') | 5.9 parts |
| · monofunctional acrylate ((component B1), manufactured by Sartomer, SR531) | 22 parts |
| · monofunctional acrylate ((component B1), manufactured by Sartomer, SR339) | 42 parts |
| · monofunctional acrylate ((component B1), manufactured by Sartomer, SR489) | 21 parts |
| · polyfunctional acrylate ((component B2), manufactured by Sartomer, SR399) | 1 part |
| · RAPI-CURE DVE-3 | 4.0 parts |
| ((component B2), vinyl ether compound, manufactured by ISP Europe) | |
| · SOLSPERSE 32000 (dispersant, manufactured by Noveon) | 0.4 parts |
| · CROMOPHTAL Yellow LA | 3.6 parts |
| ((component C), pigment, manufactured by BASF Japan) | |
| · FIRSTCURE ST-1 (polymerization inhibitor, manufactured by Chem First) | 0.05 parts |
| · BYK 307 (antifoaming agent, manufactured by BYK Chemie) | 0.05 parts |

The obtained yellow color-ink composition of Example 4 was jetted to a polyvinyl chloride sheet and cured, in the same manner as in Example 1. Then, it was evaluated in the same manner as in Example 1. The results are shown in the Table 1.

### [Example 5]

Components described below were stirred by a high speed water cooling type agitator to obtain a yellow color-ink composition.

(Yellow color-ink composition)

| | |
|---|---|
| · polymer (1a-2') | 2.0 parts |
| · monofunctional acrylate ((component B1), manufactured by Sartomer, SR531) | 26 parts |
| · monofunctional acrylate ((component B1), manufactured by Sartomer, SR339) | 42 parts |
| · monofunctional acrylate ((component B1), manufactured by Sartomer, SR489) | 21 parts |
| · polyfunctional acrylate ((component B2), manufactured by Sartomer, SR399) | 0.9 parts |
| · RAPI-CURE DVE-3 | 4.0 parts |
| ((component B2), vinyl ether compound, manufactured by ISP Europe) | |
| · SOLSPERSE 32000 (dispersant, manufactured by Noveon) | 0.4 parts |
| · CROMOPHTAL YELLOW LA | 3.6 parts |
| ((component C), pigment, manufactured by BASF Japan) | |
| · FIRSTCURE ST-1 (polymerization inhibitor, manufactured by Chem First) | 0.05 parts |
| · BYK 307 (antifoaming agent, manufactured by BYK Chemie) | 0.05 parts |

The obtained yellow color-ink composition of Example 5 was jetted to a polyvinyl chloride sheet and cured, in the same manner as in Example 1. Then, it was evaluated in the same manner as in Example 1. The results are shown in the Table 1.

### [Example 6]

Components described below were stirred by a high speed water cooling type agitator to obtain a yellow color-ink composition.

(Yellow color-ink composition)

| | |
|---|---|
| · polymer (1a-2') | 14.5 parts |
| · monofunctional acrylate ((component B1), manufactured by Sartomer, SR531) | 22 parts |
| · monofunctional acrylate ((component B1), manufactured by Sartomer, SR339) | 40 parts |
| · monofunctional acrylate ((component B1), manufactured by Sartomer, SR489) | 19.4 parts |
| · SOLSPERSE 32000 (dispersant, manufactured by Noveon) | 0.4 parts |
| · CROMOPHTAL YELLOW LA | 3.6 parts |
| ((component C), pigment, manufactured by BASF Japan) | |
| · FIRSTCURE ST-1 (polymerization inhibitor, manufactured by Chem First) | 0.05 parts |
| · BYK 307 (antifoaming agent, manufactured by BYK Chemie) | 0.05 parts |

The obtained yellow color-ink composition of Example 6 was jetted to a polyvinyl chloride sheet and cured, in the same manner as in Example 1. Then, it was evaluated in the same manner as in Example 1. The results are shown in the Table 1.

### [Example 7]

Components described below were stirred by a high speed water cooling type agitator to obtain a magenta color-ink composition.

(Magenta color-ink composition)

| | |
|---|---|
| · compound (11-9) ((component A), structure shown below) | 6.4 parts |
| · monofunctional acrylate ((component B1), manufactured by Sartomer, SR531) | 13.0 parts |
| · monofunctional acrylate ((component B1), manufactured by Sartomer, SR339) | 34.0 parts |
| · N-vinyl caprolactam | 15.0 parts |
| ((component B1), V-CAP, manufactured by ISP Japan) | |
| · bifunctional acrylate ((component B2), manufactured by Sartomer, SR9045, (alkoxylated neopentyl glycol diacrylate)) | 20.7 parts |
| · polyfunctional acrylate ((component B2), manufactured by Sartomer, SR399, (dipentaerythritol pentaacrylate)) | 1.0 part |
| · RAPI-CURE DVE-3 | 4.0 parts |
| ((component B2), vinyl ether compound, manufactured by ISP Europe) | |
| · SOLSPERSE 32000 (dispersant, manufactured by Noveon) | 1.2 parts |
| · CINQUASIA MAZENTA RT-355D | 3.6 parts |
| ((component C), pigment, manufactured by BASF Japan) | |
| · FIRSTCURE ST-1 (polymerization inhibitor, manufactured by Chem First) | 0.05 parts |
| · DAROCUR ITX | 1.0 part |
| (sensitizing agent, manufactured by BASF Japan) | |
| · BYK 307 (antifoaming agent, manufactured by BYK Chemie) | 0.05 parts |
| 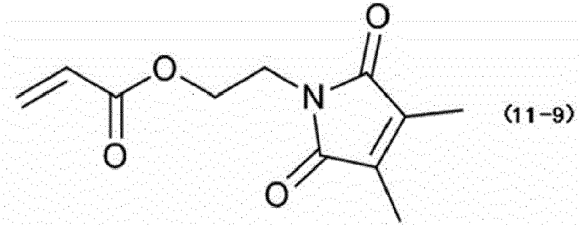 | |

The obtained magenta color-ink composition of Example 7 was jetted to a polyvinyl chloride sheet and cured, in the same manner as in Example 1. Then, it was evaluated in the same manner as in Example 1. The results are shown in the Table 1.

### [Comparative Example 1]

Components described below were stirred by a high speed water cooling type agitator to obtain a yellow color-ink composition.

(Yellow color-ink composition)

| | |
|---|---|
| · Comparative compound 1 (homopolymer of butyl methacrylate (structure shown below)) | 5.9 parts |
| (weight average molecular weight: 20,000) | |
| · monofunctional acrylate ((component B1), manufactured by Sartomer, SR531) | 22.0 parts |
| · monofunctional acrylate ((component B1), manufactured by Sartomer, SR339) | 41.0 parts |
| · monofunctional acrylate ((component B1), manufactured by Sartomer, CD420) | 21.0 parts |
| · polyfunctional acrylate ((component B2), manufactured by Sartomer, SR399) | 1.0 part |
| · RAPI-CURE DVE-3 | 4.0 parts |
| ((component B2), vinyl ether compound, manufactured by ISP Europe) | |
| · SOLSPERSE 32000 (dispersant, manufactured by Noveon) | 0.4 parts |
| · CROMOPHTAL YELLOW LA | 3.6 parts |
| ((component C), pigment manufactured by BASF Japan) | |
| · FIRSTCURE ST-1 (polymerization inhibitor, manufactured by Chem First) | 0.05 parts |
| · DAROCUR ITX | 1.0 part |
| (sensitizing agent, manufactured by BASF Japan) | |
| ·BYK 307 (antifoaming agent, manufactured by BYK Chemie) | 0.05 parts |
| 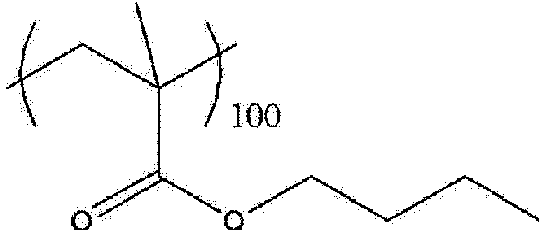 | |

The obtained yellow color-ink composition of Comparative example 1 was jetted to a polyvinyl chloride sheet and cured, in the same manner as in Example 1. Then, it was evaluated in the same manner as in Example 1. The results are shown in the Table 1.

### [Comparative Example 2]

Components described below were stirred by a high speed water cooling type agitator to obtain a yellow color-ink composition.

(Yellow color-ink composition)

| | |
|---|---|
| · monofunctional acrylate ((component B1), manufactured by Sartomer, SR531) | 22.0 parts |
| · monofunctional acrylate ((component B1), manufactured by Sartomer, SR339) | 41.0 parts |
| · monofunctional acrylate ((component B1), manufactured by Sartomer, CD420) | 21.0 parts |
| · polyfunctional acrylate ((component B2), manufactured by Sartomer, SR399) | 6.9 parts |
| · RAPI-CURE DVE-3 | 4.0 parts |
| ((component B2), vinyl ether compound, manufactured by ISP Europe) | |
| · SOLSPERSE 32000 (dispersant, manufactured by Noveon) | 0.4 parts |
| · CROMOPHTAL YELLOW LA | 3.6 parts |
| ((component C), pigment, manufactured by BASF Japan) | |
| · FIRSTCURE ST-1 (polymerization inhibitor, manufactured by Chem First) | 0.05 parts |
| · DAROCUR ITX (sensitizing agent, manufactured by BASF Japan) | 1.0 part |
| · BYK 307 (antifoaming agent, manufactured by BYK Chemie) | 0.05 parts |

The obtained yellow color-ink composition was jetted to a polyvinyl chloride sheet and cured, in the same manner as in Example 1. Then, it was evaluated in the same manner as in Example 1. The results are shown in the Table 1.

### [Comparative Example 3]

| | |
|---|---|
| · 1,6-bismaleimide hexane (Comparative Compound 2, manufactured by Tokyo Chemical Industry Co., Ltd., structure shown below) | 6.5 parts |
| · monofunctional acrylate ((component B1), manufactured by Sartomer, SR531, (cyclic trimethylol propane formal acrylate)) | 10.5 parts |
| · monofunctional acrylate ((component B1), manufactured by Sartomer, SR339, (2-phenoxyethyl acrylate)) | 36.5 parts |
| · monofunctional acrylate ((component B1), manufactured by Sartomer, SR506, (isobornyl acrylate)) | 23.7 parts |
| · bifunctional acrylate ((component B2), manufactured by Sartomer, SR508, (dipropylene glycol diacrylate)) | 4.0 parts |
| · N-vinyl caprolactam | 14.0 parts |
| ((component B1), V-CAP, manufactured by ISP Japan) | |
| · SOLSPERSE 32000 (dispersant, manufactured by Noveon) | 1.2 parts |
| · IRGALITE BLUE GLVO | 3.0 parts |
| ((component C), pigment, manufactured by BASF Japan) | |
| · FIRSTCURE ST-1 (polymerization inhibitor, manufactured by Chem First) | 0.05 parts |
| · DAROCUR ITX | 0.5 parts |
| (sensitizing agent, manufactured by BASF Japan) | |
| · BYK 307 (antifoaming agent manufactured by BYK Chemie) | 0.05 parts |
| 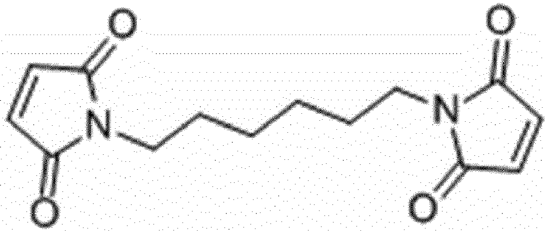 | |

The obtained blue color-ink composition was jetted to a polyvinyl chloride sheet and cured, in the same manner as in Example 1. Then, it was evaluated in the same manner as in Example 1. The results are shown in the Table 1.

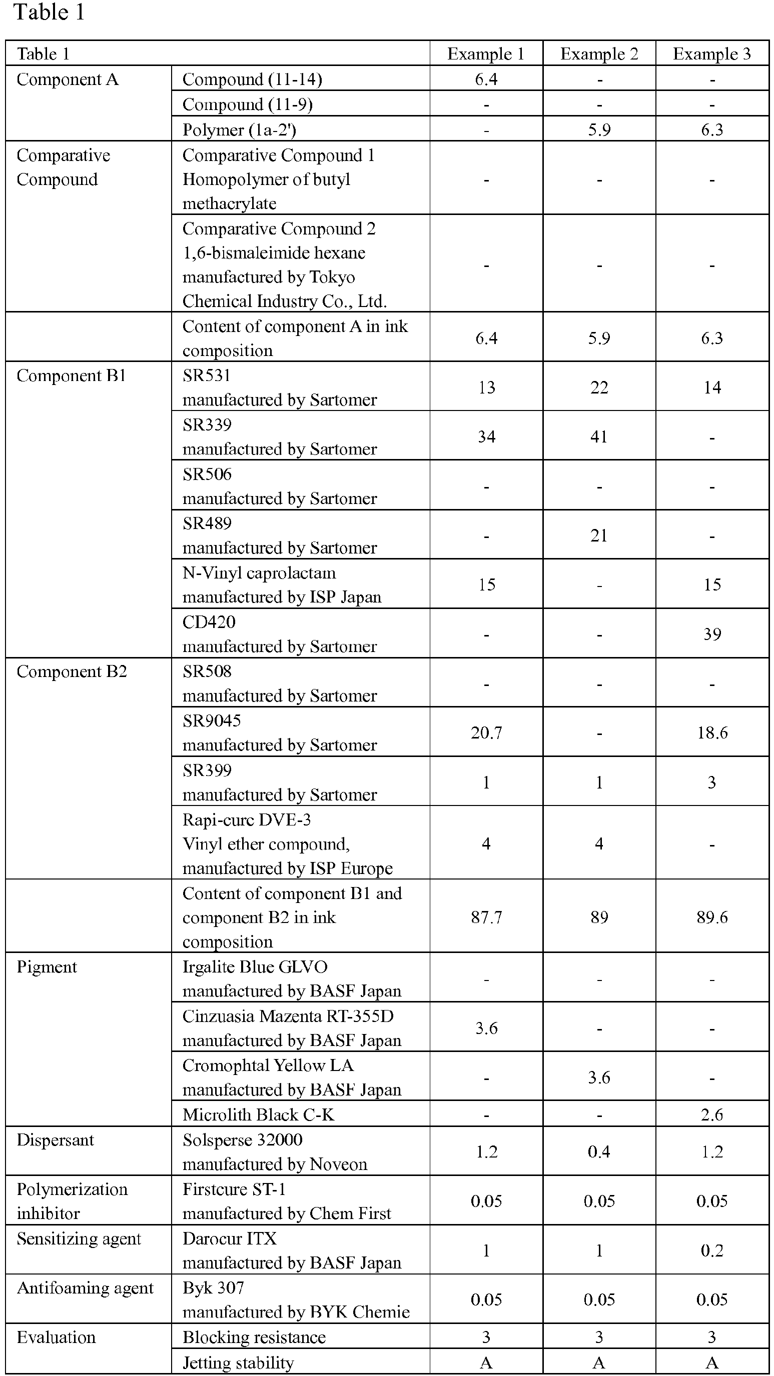

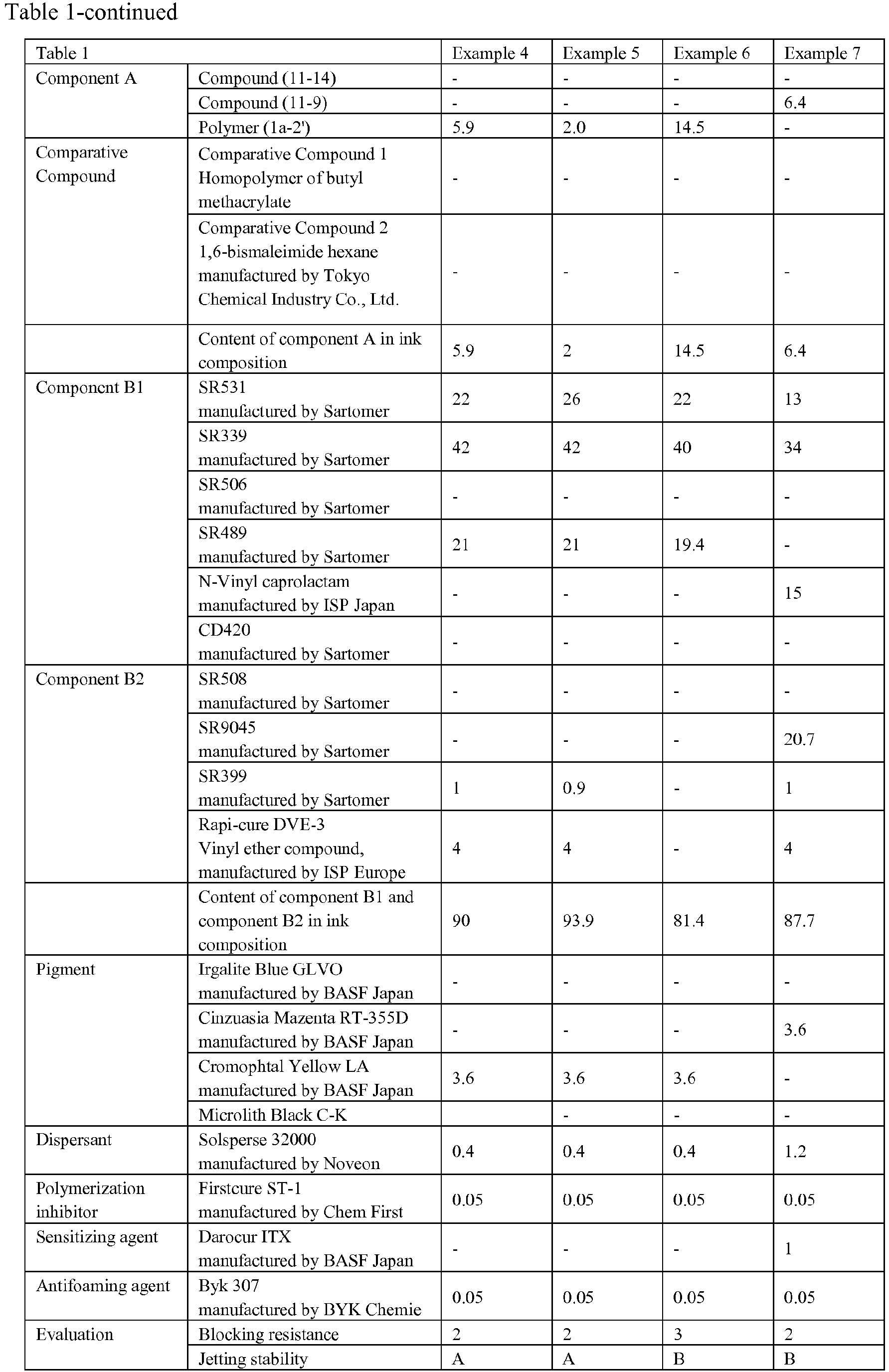

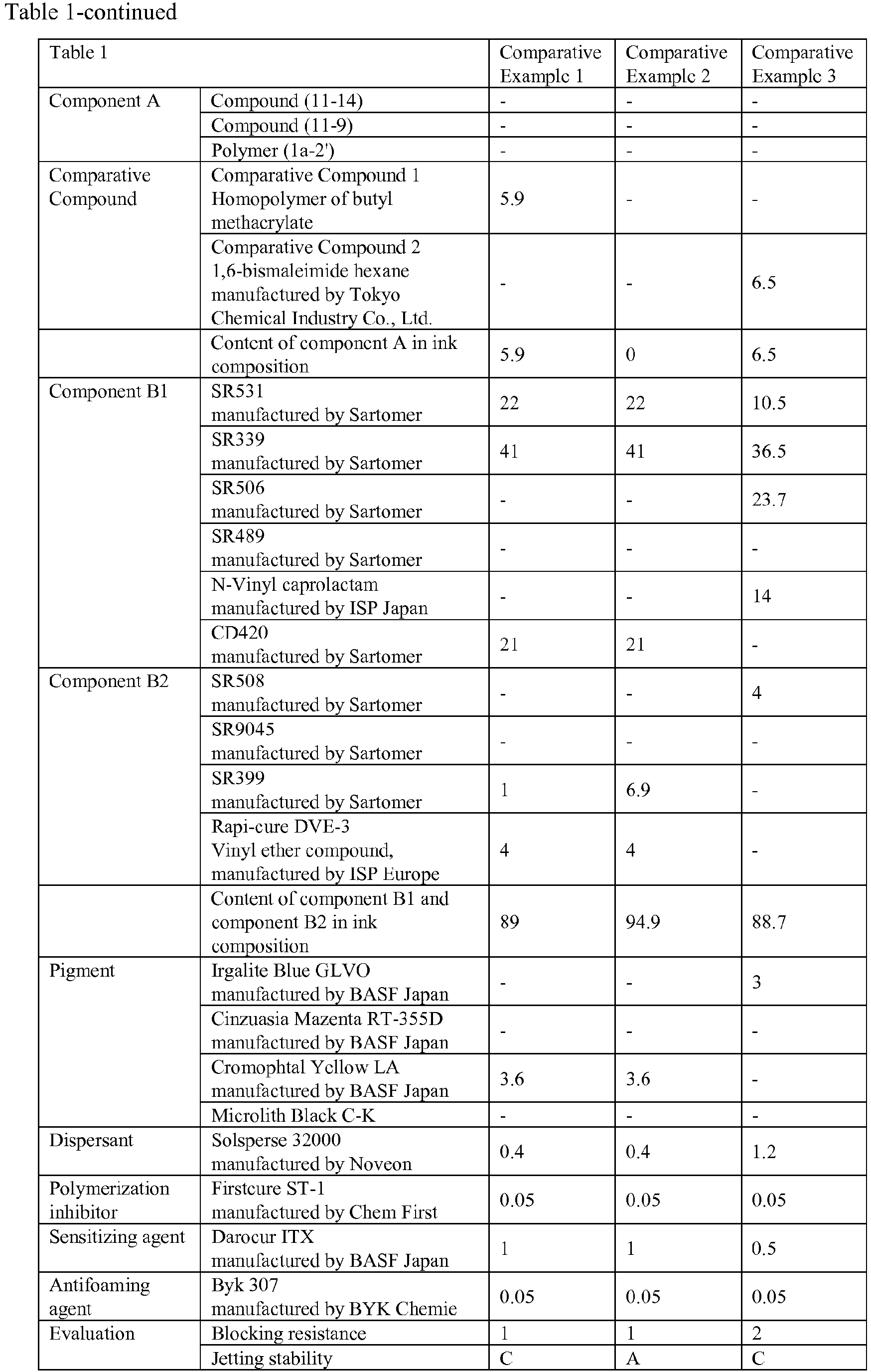

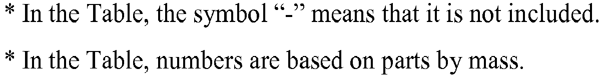

Disclosure of Japanese Patent Application No. 2011-068835 is entirely incorporated by reference in the present specification.

All publications, patent applications, and technical standards mentioned in this specification are herein incorporated by reference to the same extent as if each individual publication, patent application, or technical standard was specifically and individually indicated to be incorporated by reference.

## Claims

1. An ink composition comprising:
(component A) a compound having a group represented by the following Formula (1);
(component B1) a monofunctional polymerizable compound; and
(component C) a coloring material: 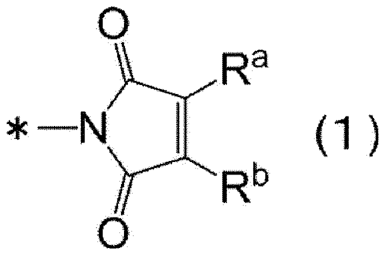 wherein, in Formula (1), R^{a} and R^{b} each independently represent a hydrogen atom or an alkyl group having 1 to 4 carbon atoms; R^{a} and R^{b} may be bonded to each other to form a 4- to 6-membered alicyclic structure; R^{a} and R^{b} do not represent a hydrogen atom at the same time; and * represents a bonding site.

2. The ink composition according to claim 1, further comprising (component B2) a polyfunctional polymerizable compound.

3. The ink composition according to claim 2, wherein a total content of the (component B1) and the (component B2) in the ink composition is from 50% by mass to 90% by mass with respect to the ink composition.

4. The ink composition according to claim 2 or 3, wherein a content of the (component B1) monofunctional polymerizable compound is from 50% by mass to 99.5% by mass with respect to a total content of the (component B1) monofunctional polymerizable compound and the (component B2) polyfunctional polymerizable compound.

5. The ink composition according to any one of claims 1 to 4, wherein a content of the (component A) in the ink composition is from 0.1 % by mass to 20% by mass with respect to the ink composition.

6. The ink composition according to claim 5, wherein a content of the (component A) in the ink composition is from 1% by mass to 15% by mass with respect to the ink composition.

7. The ink composition according to any one of claims 1 to 6, wherein the (component A) is a compound represented by the following Formula (11): 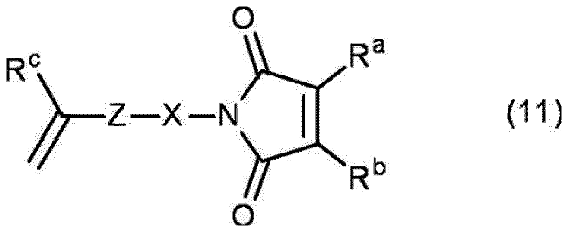 wherein, in Formula (11), R^{a} and R^{b} each independently represent a hydrogen atom or an alkyl group having 1 to 4 carbon atoms; R^{a} and R^{b} may be bonded to each other to form a 4- to 6-membered alicyclic structure; R^{a} and R^{b} do not represent a hydrogen atom at the same time; R^{c} represents a hydrogen atom or a methyl group; Z represents a single bond, -COO-* or -CONR^{d}-*; R^{d} represents a hydrogen atom or an alkyl group having 1 to 4 carbon atoms; * represents a bonding site with X; and X represents a group selected from the group consisting of an alkylene group, an arylene group, an aralkylene group, and an alkenylene group.

8. The ink composition according to claim 7, wherein X in Formula (11) is an alkylene group having 1 to 12 carbon atoms, an arylene group having 6 to 14 carbon atoms, or an aralkylene group having 7 to 20 carbon atoms.

9. The ink composition according to any one of claims 1 to 6, wherein the (component A) is a polymer including a repeating unit represented by the following Formula (1a): 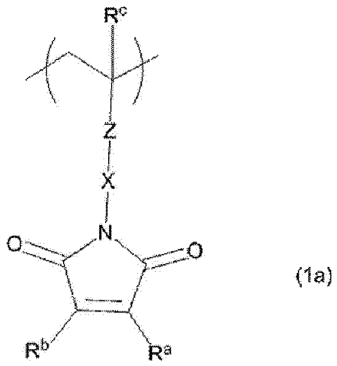 wherein, in Formula (1a), R^{a} and R^{b} each independently represent a hydrogen atom or an alkyl group having 1 to 4 carbon atoms; R^{a} and R^{b} may be bonded to each other to form a 4- to 6-membered alicyclic structure; R^{a} and R^{b} do not represent a hydrogen atom at the same time; R^{c} represents a hydrogen atom or a methyl group; Z represents a single bond, -COO-* or -CONR^{d}-*; R^{d} represents a hydrogen atom or an alkyl group having 1 to 4 carbon atoms; * represents a bonding site with X; and X represents a group selected from the group consisting of an alkylene group, an arylene group, an aralkylene group, and an alkenylene group.

10. The ink composition according to claim 9, wherein X in Formula (1a) is an alkylene group having 1 to 12 carbon atoms, an arylene group having 6 to 14 carbon atoms, or an aralkylene group having 7 to 20 carbon atoms.

11. The ink composition according to any one of claims 1 to 10, comprising an N-vinyl compound as the (component B1) monofunctional polymerizable compound.

12. The ink composition according to claim 11, wherein the N-vinyl compound is represented by the following Formula (V): 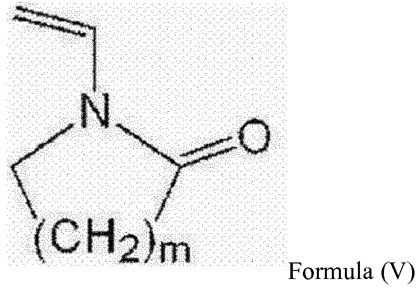 wherein, in Formula (V), m represents an integer of from 1 to 5.

13. The ink composition according to any one of claims 1 to 12, being an ink composition for inkjet recording.

14. An image forming method comprising:
an ink application process of applying the ink composition according to any one of claims 1 to 13 onto a recording medium; and
an irradiation process of irradiating the applied ink composition with an active energy ray.

15. The image forming method according to claim 14, wherein the process of applying the ink composition is performed according to an inkjet method.
